(19) Europäisches Patentamt
European Patent Office
Office européen des brevets

(11) **EP 3 217 205 B1**

(12) **EUROPÄISCHE PATENTSCHRIFT**

(45) Veröffentlichungstag und Bekanntmachung des Hinweises auf die Patenterteilung:
**06.02.2019   Patentblatt 2019/06**

(51) Int Cl.:
***G02B 21/00*** (2006.01)

(21) Anmeldenummer: **16205374.8**

(22) Anmeldetag: **20.12.2016**

(54) **VORRICHTUNG UND VERFAHREN ZUR MULTISPOT-SCANNING-MIKROSKOPIE**

DEVICE AND METHOD FOR MULTISPOT SCANNING MICROSCOPY

DISPOSITIF ET PROCÉDÉ DE MICROSCOPIE PAR BALAYAGE MULTIZONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2016   DE 102016102286**

(43) Veröffentlichungstag der Anmeldung:
**13.09.2017   Patentblatt 2017/37**

(73) Patentinhaber: **Carl Zeiss Microscopy GmbH**
**07745 Jena (DE)**

(72) Erfinder:
• **ANHUT, Tiemo**
**07749 Jena (DE)**
• **SCHWEDT, Daniel**
**99423 Weimar (DE)**
• **KAUFHOLD, Tobias**
**07749 Jena (DE)**
• **ROSCHER, Burkhard**
**07743 Jena (DE)**
• **WILHELM, Stefan**
**07743 Jena (DE)**

(74) Vertreter: **Schiffer, Axel Martin et al**
**Rundfunkplatz 2**
**80335 München (DE)**

(56) Entgegenhaltungen:
DE-A1-102013 021 182     DE-A1-102013 022 026
DE-A1-102014 119 027     US-A1- 2006 012 872

**Beschreibung**

Die vorliegende Erfindung bezieht sich in einem ersten Gesichtspunkt auf eine Vorrichtung zur Multispot-Scanning-Mikroskopie nach dem Oberbegriff des Anspruchs 1. In einem zweiten Gesichtspunkt betrifft die Erfindung ein Verfahren zur Multispot-Scanning-Mikroskopie nach dem Oberbegriff des Anspruchs 19.

Eine gattungsgemäße Vorrichtung zur Multispot-Scanning-Mikroskopie ist beispielsweise beschrieben in WO-13 131 808 A1 und weist folgende Komponenten auf: eine mehrfarbige Lichtquelle zum Bereitstellen von mindestens einem Beleuchtungslichtstrahl, eine Trenneinrichtung zum Auftrennen des Beleuchtungslichtstrahls in mehrere Beleuchtungsteilstrahlen, erste Optikmittel zum Bereitstellen eines Beleuchtungsstrahlengangs zum Leiten und Fokussieren der einzelnen Beleuchtungsteilstrahlen jeweils in einen Leuchtfleck auf oder in eine zu untersuchende Probe, eine Scaneinheit zum Führen der Leuchtflecke über die Probe, eine Detektionseinheit zum Nachweisen von Detektionslicht, welches die Probe in Detektionsteilstrahlen nach Bestrahlung mit den einzelnen Beleuchtungsteilstrahlen abstrahlt, zweite Optikmittel zum Bereitstellen eines Detektionsstrahlengangs zum Leiten der Detektionsteilstrahlen auf die Detektoreinheit und eine Steuer- und Auswerteeinheit zum Ansteuern der Scaneinheit und zum Auswerten des von der Detektionseinheit nachgewiesenen Detektionslichts.

Ein gattungsgemäßes Verfahren zur Multispot-Scanning-Mikroskopie ist ebenfalls in WO 13-131 808 A1 offenbart. Dort werden folgende Schritte durchgeführt: Mit einer mehrfarbigen Lichtquelle wird mindestens ein Beleuchtungslichtstrahl bereitgestellt, der Beleuchtungslichtstrahl wird in mehrere Beleuchtungsteilstrahlen aufgetrennt, die einzelnen Beleuchtungsteilstrahlen werden in einem Beleuchtungsstrahlengang jeweils in einen Leuchtfleck auf oder in eine zu untersuchende Probe geleitet und über diese gescannt, Detektionslicht, welches die Probe in Detektionsteilstrahlen nach Bestrahlung mit den einzelnen Beleuchtungsteilstrahlen abstrahlt, wird auf eine Detektoreinheit geleitet und von dieser nachgewiesen.

Die Laser-Scanning-Mikroskopie hat sich zu einem unverzichtbaren Werkzeug in den Lebenswissenschaften entwickelt. Insbesondere die Darstellung von dreidimensionalen Strukturen in einem streuenden Hintergrund macht die Methode überaus geeignet für einen weiten Bereich an biologisch-medizinischen Fragestellungen. Insbesondere die große Vielseitigkeit der Methode hat zu einer großen Verbreitung entsprechender Systeme und einem breiten Einsatzbereich geführt.

Allerdings weist die Methode nach wie vor eine Reihe von Problemen auf. Hierzu gehört einerseits eine signifikante Tendenz zum Bleichen der Fluoreszenz und allgemein zur Photoschädigung der Probe, zweitens eine relativ langsame Bildaufnahme und drittens das erhöhte Rauschen im Vergleich zu Weitfeldmethoden.

Die Gründe hierfür liegen in der Art des Bildaufbaus. Dieser erfolgt in der Regel so, dass ein Punkt, genauer das Volumen der Beleuchtungspunktverteilungsfunktion (die im Folgenden als PSF abgekürzt wird), die Probe sequentiell abrastert oder abscant. Das außerfokale Licht wird an einer Blende gegenüber dem fokalen Signallicht diskriminiert. Dies führt zu einer Bildgebung mit der Eigenschaft des optischen Schnitts (optical sectioning). Das heißt, nur das Licht aus der Fokalebene trägt zum Signal bei. Somit ist eine, wie man sagt, "blur"-freie (etwa "nicht verschwommene") Abbildung auch optisch dickerer und leicht streuender Proben möglich. Das Abtasten der Probe mit einem Laserstrahl führt einerseits zu hohen Leistungen in einem sogenannten Fokalspot. Das ist der Beleuchtungsfleck auf oder in welchen das Beleuchtungslicht auf oder in einer Probe fokussiert wird. Andererseits ermöglicht das Abtasten der Probe nur einen langsamen Bildaufbau, welcher durch die Geschwindigkeit der Scanner oder durch die Emissionsrate der Farbstoffe in der Probe begrenzt wird. Die Emissionsrate der Farbstoffe in der Probe ist naturgemäß klein weil jeweils nur kleine Volumina in der Probe abgetastet werden.

Ungeachtet seiner sehr weiten Verbreitung in den Lebendwissenschaften weist die konfokale Mikroskopie insbesondere das Problem auf, dass für die Signalgenerierung mit einem akzeptablen Signal-zu-Rausch-Verhältnis (SNR) in einer kurzen Zeit eine gewisse Anzahl an Photonen generiert werden muss (z.B. 10 MHz Rate Signalphotonen zur Detektion von 10 Photonen in einer Pixelzeit von 1 $\mu$s mit einem SNR von ca. 3; durch die Verluste im System muss die Rate in der Probe noch deutlich höher sein). Damit geht einerseits das Ausbleichen der Probe und andererseits eine Schädigung einher, die die Untersuchung vieler Parameter im Bereich der Lebendzellmikroskopie unmöglich macht oder zumindest erheblich erschwert.

Eine Verkürzung der Pixelzeit führt zwar zu einer etwas schnelleren Bildgebung, führt aber andererseits zu noch höheren Leistungen im Fokalspot zur hinreichend hohen Signalgenerierung. Das inhärente Dilemma bezüglich der drei grundlegenden Anforderungen 1) Bildgeschwindigkeit, 2) gutes Signal-zu-Rausch-Verhältnis und 3) geringe Photoschädigung läßt sich beim Single-Spot-Laserscanningmikroskop also nicht auflösen.

Eine weitere wichtige Eigenschaft der Fluoreszenzmikroskopie ist deren spektrale Breitbandigkeit. Die Anregungsmaxima der unterschiedlichen Farbstoffe liegen in einem Bereich, welcher vom UV über das sichtbare Spektrum bis hin zum infraroten Spektralbereich reicht. In kommerziellen Standardsystemen wird in der Regel eine Anregung im Wellenlängenbereich 400 nm - 645 nm oder darüber hinaus angeboten. Die Abtastung der Probe mit nur einem Laserfokus ist auch an dieser Stelle nachteilig. Zwar können im gleichen Fokalspot mehrere Anregungswellenlängen fokussiert und somit mehrere Fluorophore simultan angeregt werden. Jedoch kommt es auch bei einer spektral selektiven Detektion immer zu sogenannten Kreuzanregungen und zur Detektion von ungewollten Spektralanteilen, die zu einer falschen Zuordnung von Strukturen oder einem ungewollten Hintergrund führen können.

Etwas bessere Verhältnisse hinsichtlich des erzielbaren SNR bietet ein Spinning disk (SD) System. Dabei wird das Licht auf viele (ca. 1000) Fokalvolumina verteilt. Bei etwa gleichem SNR erhöht sich damit die Beleuchtungszeit eines bestimmten Bereiches in der Probe bei gleichzeitig geringerer Intensität pro Fokalvolumen. Dies führt in Summe zu einem hinsichtlich Probenschädigung durch Phototoxizität massiv verbesserten Verhalten. Allerdings sind diese Systeme nicht flexibel nutzbar. Insbesondere kann der Spotabstand nicht variiert werden. Zudem ist die Detektion auf Kameras eingeschränkt, was eine Detektion von mehr als 2 spektralen Kanälen erheblich erschwert. Zudem kann mit diesen nicht-scanner-basierten Systemen nicht elektronisch in die Probe gezoomt werden. Punktmessungen, wie zum Beispiel die Fluoreszenz-Korrelations-Spektroskopie, sind mit diesen Systemen überhaupt nicht möglich.

Weitere Multipunktsysteme sind beschrieben worden in DE 102 15 162 B4, WO 13 131 808 A1, US-6,028,306 A. Ein Problem stellt bei diesen Systemen immer die Bereitstellung der scannenden Laserpunkte dar. Anordnungen hierfür sind z.B. in DE 102 15 162 B4 und DE 10 2010 047 353 A1 beschrieben.

Eine Eigenschaft all dieser Systeme ist zudem, dass diese nur eine passive Multistrahlgenerierung anbieten. Das heißt, dass zum Beispiel die Farbaufteilung in der Regel feststeht und im Allgemeinen für alle Strahlen gleich ist. In AT-131942-E werden für verschiedene Abtastpunkte verschiedene Laser verwendet, was dieses System sehr in seiner Flexibilität einschränkt. Weiterhin sind die Helligkeiten einzelner Strahlen und Farben nicht einzeln abgleichbar, was dann ein Problem darstellt, wenn mit verschiedenen Farben verschieden stark markierte Strukturen untersucht werden sollen.

Bei Messungen, bei welchen es insbesondere auf eine hohe Qualität ankommt, wird in der Regel ein sogenannter zeitlicher Multitrack aufgenommen. Hierbei werden die Bilder verschiedener Fluorophore, die jeweils eine bestimmte Wellenlänge zur Anregung sowie eine bestimmte spektrale Konfiguration zur Detektion benötigen, zeitlich hintereinander aufgenommen, obwohl die herkömmlichen Systeme prinzipiell die gleichzeitige Aufnahme möglich machen. Wenngleich der Nutzer hierbei einen zeitlichen Nachteil hat, überwiegt doch der Gewinn hinsichtlich der gewonnenen Qualität.

In AT-131942-E wird ein System angegeben, welches den Effekt des spektralen Übersprechens dadurch vermeidet, dass die spektrale Anregung an jeweils unterschiedlichen Orten in der Probe erfolgt. Hier kann von einem räumlichen spektralen Multitracking gesprochen werden. Allerdings sind die Farbkanäle dabei fest vorgegeben und nicht konfigurierbar. Damit ist dieses System bei Proben, welche weniger als die Anzahl prinzipiell detektierbarer Farbstoffe enthalten, hinsichtlich anderer Parameter, wie zum Beispiel Probenschonung oder Geschwindigkeit, nicht optimierbar, da die Wellenlängenaufteilung fest vorgegeben ist.

Als eine Aufgabe der vorliegenden Erfindung kann angesehen werden, eine Vorrichtung und ein Verfahren anzugeben, bei denen die oben benannten Probleme weitestgehend vermieden werden.

Diese Aufgabe wird durch die Vorrichtung mit den Merkmalen des Anspruchs 1 und durch das Verfahren mit den Merkmalen des Anspruchs 19 gelöst.

Vorteilhafte Ausführungsbeispiele der erfindungsgemäßen Vorrichtung und bevorzugte Varianten des erfindungsgemäßen Verfahrens werden im Folgenden, insbesondere im Zusammenhang mit den abhängigen Ansprüchen und den Figuren beschrieben.

Die oben angegebene gattungsgemäße Vorrichtung ist erfindungsgemäß dadurch weitergebildet, dass im Beleuchtungsstrahlengang für mindestens zwei der Beleuchtungsteilstrahlen ein steuerbares Strahlmanipulationsmittel vorhanden ist zum unabhängigen Einstellen einer spektralen Zusammensetzung des jeweiligen Beleuchtungsteilstrahls und dass die Steuer- und Auswerteeinheit eingerichtet ist zum Ansteuern der Strahlmanipulationsmittel.

Das oben angegebene gattungsgemäße Verfahren ist erfindungsgemäß dadurch weitergebildet, dass eine spektrale Zusammensetzung des Beleuchtungslichts für mindestens zwei der Beleuchtungteilstrahlen unabhängig eingestellt wird.

Ein wesentlicher Vorteil der vorliegenden Erfindung kann darin gesehen werden, dass die erfindungsgemäß Vorrichtung probenabhängig derart optimiert werden kann oder sich auch selbst optimieren kann, dass eine deutliche Erhöhung der Scangeschwindigkeit, eine Verminderung der Photoschädigung, eine Vermeidung von spektralen Kreuzanregungen oder eine Erhöhung des Signal-zu-Rausch-Verhältnisses erreicht werden kann. Zudem sind in verschiedenen so ausgebildeten Anregungs-/Detektionspfaden verschiedene Sensortypen kombinierbar (zum Beispiel die Kombination eines räumlich auflösenden, beispielsweise pixelierten, Detektors, mit dem die Punktverteilungsfunktion, auch bezeichnet als Punktabbildungsfunktion oder PSF, räumlich ausgemessen werden kann, mit einem integrierenden Detektor). Damit wird eine flexible optische Anordnung für verschiedene Messaufgaben in der biomedizinischen Bildgebung zur Verfügung gestellt. Gleichzeitig wird ein neues spektralselektives Mikroskopieverfahren bereitgestellt.

Bevorzugt weisen die ersten optischen Mittel und die zweiten optischen Mittel als gemeinsame Komponenten mindestens ein Mikroskopobjektiv, eine x-y-Scannereinheit und/oder mindestens einen Hauptfarbteiler auf.

Die wesentlichen Vorteile der Erfindung werden bereits dadurch realisiert, dass in mehreren Beleuchtungsteilstrahlen das Spektrum des Beleuchtungslichts separat und unabhängig eingestellt wird. Besonders bevorzugt ist aber zusätzlich bei der erfindungsgemäßen Vorrichtung im Detektionsstrahlengang für mindestens zwei der Detektionsteilstrahlen ein steuerbares spektrales Auswahlmittel vorhanden zum unabhängigen Beeinflussen einer spektralen Zusammensetzung von über den jeweiligen Detektionsteilstrahl auf die Detektionseinheit gelangendem Detektionslicht und die Steuer- und Auswerteeinheit ist auch eingerichtet zum Ansteuern der spektralen Auswahlmittel. Dem entspricht eine Variante des erfindungsgemäßen Verfahrens, bei der bei mindestens zwei Detektionsteilstrahlen eine spektrale Zusammensetzung von über den jeweiligen Detektionsteilstrahl auf die Detektionseinheit gelangendem Detektionslicht unabhängig beeinflusst wird. Bei diesen Varianten wird der besondere Vorteil erreicht, dass sowohl beleuchtungsseitig als auch detektionsseitig eine spektrale Selektion erfolgt. Die Messung kann deshalb hochspezifisch auf die jeweilige Probe und insbesondere auf die jeweils zum Einsatz kommenden Fluoreszenzfarbstoffe abgestimmt werden.

Grundsätzlich wird die wesentliche Idee der Erfindung bereits realisiert, wenn in mindestens zwei Beleuchtungsteilstrahlen die spektrale Zusammensetzung unabhängig eingestellt werden kann. Besonders bevorzugt sind aber Varianten der erfindungsgemäßen Vorrichtung, bei denen im Beleuchtungsstrahlengang für jeden Beleuchtungsteilstrahl zum unabhängigen Einstellen einer spektralen Zusammensetzung des jeweiligen Beleuchtungsteilstrahls ein Strahlmanipulationsmittel vorhanden ist. Diesen Ausführungsbeispielen entspricht eine Variante des erfindungsgemäßen Verfahrens, bei der die spektrale Zusammensetzung des Beleuchtungslichts für jeden Beleuchtungsteilstrahl unabhängig eingestellt wird. Die oben beschriebenen erfindungsgemäßen Vorteile, dass die Beleuchtung und die Detektion besonders gut an prinzipiell beliebige Proben und grundsätzlich beliebige Fluoreszenzfarbstoffe angepasst werden können, werden dabei in besonderer Weise erzielt. Insbesondere ist es möglich, mit der erfindungsgemäßen Vorrichtung auch spektral überlappende Bänder zu messen.

Aus demselben Grund sind Ausführungsbeispiele der erfindungsgemäßen Vorrichtung bevorzugt, bei denen im Detektionsstrahlengang für jeden Detektionsteilstrahl ein steuerbares spektrales Auswahlmittel vorhanden ist zum unabhängigen Beeinflussen einer spektralen Zusammensetzung von über den jeweiligen Detektionsteilstrahl auf die Detektionseinheit gelangendem Detektionslicht. Bei einer Variante des erfindungsgemäßen Verfahrens wird entsprechend bei jedem Detektionsteilstrahl die spektrale Zusammensetzung von über den jeweiligen Detektionsteilstrahl auf die Detektionseinheit gelangendem Detektionslicht unabhängig beeinflusst. Mit diesen Ausführungsbeispielen werden eine hochfunktionale Vorrichtung und ein umfangreich bezüglich der verschiedensten Messsituationen konfigurierbares Verfahren bereitgestellt.

Grundsätzlich kann, beispielsweise wenn Multiplextechniken zum Einsatz kommen, ein einziger Detektor zum Nachweis des Detektionslichts ausreichend sein. Bevorzugt weist die Detektionseinheit aber mehrere Einzeldetektoren auf zum Messen des Detektionslichts, welches jeweils von einem bestimmten Leuchtfleck auf der Probe ausgesandt wird. Die Messdaten können dann besonders effektiv aufgenommen werden.

Ein weiteres bevorzugtes Ausführungsbeispiel der erfindungsgemäßen Vorrichtung ist dadurch gekennzeichnet, dass die optischen Komponenten im Detektionsstrahlengang, insbesondere die steuerbaren spektralen Auswahlmittel, die Punktverteilungsfunktion erhaltende Komponenten sind. Aus der Punktverteilungsfunktion können weitere nützliche Informationen über die zu untersuchenden Proben gewonnen werden.

Grundsätzlich können die Einzeldetektoren beispielsweise Photomultiplier oder einzelne Fotodioden sein. Wenn aber beispielsweise eine Punktverteilungsfunktion ausgemessen werden soll, ist es zweckmäßig, wenn die Einzeldetektoren jeweils ortsauflösende Detektoren und insbesondere jeweils zweidimensionale Fotodiodenarrays sind. Besonders vorteilhaft sind dabei sogenannte Single-Photon Avalanche Diode Arrays (SPAD-Arrays). Diese weisen eine sehr gute Empfindlichkeit auf, mit welcher auch einzelne Photonen gezählt werden können. Zudem können pixellierte Strukturen dieser Lawinenphotodioden hergestellt werden. Neben diesen Sensoren können aber auch herkömmliche Photomultiplier zum Einsatz kommen, wenn man sie mit lichtumverteilenden Mitteln versieht (Modul Airyscan der Firma Zeiss). Schließlich können auch Mikrokanalplatten (Microchannelplates) und/oder fasergekoppelte Photomultiplier zum Einsatz kommen. Besonders vorteilhaft ist dabei, wenn unterschiedliche Sensortypen zum Einsatz kommen, beispielsweise ein räumliches Ausmessen der Punktverteilungsfunktion mit einem räumlich auflösenden Detektor kombiniert mit einem integrierenden Detektor. Als Strahlmanipulationsmittel können grundsätzlich alle Komponenten zum Einsatz kommen, welche die gewünschte Funktion einer spektralen Selektivität aufweisen. Diese Funktion kann grundsätzlich auf Brechung, Beugung, selektiver Reflexion und/oder Absorption beruhen.

Um die Intensität von Laserlicht schnell variieren oder modulieren zu können, werden in der Laser-Scanning-Mikroskopie als Strahlmanipulationsmittel bevorzugt akusto-optische Elemente eingesetzt. Soll lediglich eine Laserlinie in ihrer Intensität beeinflusst werden, so kann ein akusto-optischer Modulator (AOM) eingesetzt werden. Liegt hingegen ein Multiplex aus mehreren Laserlinien unterschiedlicher Wellenlänge vor, die jeweils in ihrer Intensität variiert werden sollen, so muss ein akusto-optischer Filter (AOF) zum Einsatz kommen. Im Allgemeinen erlauben akusto-optische Modulatoren (AOM) höhere Modulationsfrequenzen als AOTFs. Solche akusto-optische Elemente sind speziell geschnittene und geschliffene Kristalle (beispielsweise aus $TeO_2$), in denen mit Hilfe von Hochfrequenzsignalen, die einen sogenannten Transducer zu Schwingungen anregen, ein Beugungsgitter erzeugt wird.

Sowohl die spektralen als auch die optischen Eigenschaften des akusto-optischen Elements werden wesentlich von der Form und der Größe dieses Transducers bestimmt. Ein Teil des in das akusto-optische Element eingekoppelten Laserlichts wird an dem im Kristall angeregtem Gitter gebeugt. Dieser durch Beugung abgelenkte Anteil des Laserlichts kann in seiner Intensität eingestellt werden, indem die Leistung des eingelegten Hochfrequenzsignals variiert wird.

Während beim AOM nur ein hochfrequenter Träger mit der charakteristischen Frequenz $f_\lambda$ angelegt werden muss, um eine Laserlinie der Wellenlänge $\lambda$ zu beeinflussen, wird beim AOTF ein Multiplex aus mehreren hochfrequenten Trägern benötigt, um mehrere Laserlinien in ihrer Intensität zu variieren.

Derartige akusto-optische Elemente werden sowohl räumlich einkanalig als auch mehrkanalig angeboten. Bei einem einkanaligen AOM/AOTF ist auf dem Kristall lediglich ein Transducer aufgebracht. Es kann demzufolge nur ein Laserstrahl beziehungsweise ein Bündel aus mehreren Laserlinien beeinflusst werden. Bei einem räumlich mehrkanaligem AOM/AOTF werden auf ein- und demselben Kristall mehrere Transducer nebeneinander aufgebracht. Dadurch wird es möglich, mehrere parallele Laserstrahlen gleicher Wellenlänge (AOM) oder mehrere parallele und in sich kollineare Laserlinienbündel (AOTF) gleichzeitig, aber unabhängig voneinander in ihrer Intensität zu beeinflussen.

Bevorzugt weisen die die Strahlmanipulationsmittel mehrere akusto-optische Elemente, insbesondere AOM, AOD und/oder AOTF, auf. Akusto-optische Komponenten sind kommerziell, insbesondere auch in sehr kleinen Baugrößen, die für die Mikroskopie vorteilhaft sind, erhältlich. Weiterhin sind aber auch alternative segmentierte Strahlmanipulationsmittel, wie zum Beispiel mehrkanalige elektro-optische Modulatoren (EOM) oder "spatial light modulators" (räumliche Lichtmodulatoren) (SLM, DMD, MEMS usw.) vorteilhaft einsetzbar.

Bei einem besonders bevorzugten Ausführungsbeispiel der erfindungsgemäßen Vorrichtung weisen die Strahlmanipulationsmittel mindestens einen räumlich mehrkanaligen AOTF auf. Entsprechend wird bei einer besonders bevorzugten Variante des erfindungsgemäßen Verfahrens zum unabhängigen Einstellen der spektralen Zusammensetzung des Beleuchtungslichts in den Beleuchtungsteilstrahlen mindestens ein räumlich mehrkanaliger AOTF/AOM als Strahlmanipulationsmittel verwendet. Derart räumlich mehrkanalige AOTF/AOM sind für die Multispot-Scanning-Mikroskopie besonders geeignet, weil mit diesen Komponenten die Beleuchtungsstrahlen vergleichsweise dicht nebeneinander geführt werden können. Die zum Einsatz kommenden Linsen können deshalb ebenfalls vergleichsweise klein sein.

Die Erfindung bezieht sich auch auf die vorteilhafte Ansteuerung eines akusto-optischen Elements, beispielsweise eines AOTF/AOM, mit mehreren Kanälen.

Für die Ansteuerung von AOM/AOTF werden spezielle HF-Synthesizerbaugruppen eingesetzt, die je nach Anwendung einzelne sinusförmige Hochfrequenzsignale (AOM) oder einen Multiplex aus mehreren Hochfrequenzsignalen unterschiedlicher Frequenz (AOTF) bereitstellen. Die Leistung der Hochfrequenzsignale kann, je nach Ausführung der Synthesizerbaugruppe, mit analogen Steuersignalen beeinflusst oder digital moduliert werden. Bei der Ansteuerung von räumlich mehrkanaligen AOM/AOTF ist es im Prinzip möglich, die von den Synthesizerbaugruppen bereitgestellten Ansteuersignale mit Hilfe von Leistungssplittern (Power-Splittern) auf die Transducer aufzuteilen. Diese Vorgehensweise schränkt die Flexibilität jedoch erheblich ein, weil dann die Modulation für alle Transducer des räumlich mehrkanaligen AOM/AOTF synchron erfolgt.

Eine wesentlich flexiblere Ansteuerung wird möglich, wenn jeder Transducer eines räumlich mehrkanaligen akusto-optischen Elements durch eine separate Synthesizerbaugruppe angesteuert wird. Aufgrund von Wechselwirkungen zwischen den Transducern eines räumlich mehrkanaligen akusto-optischen Elements ist bei der Auslegung der Synthesizerbaugruppen eine Reihe von Bedingungen einzuhalten, um unerwünschte Nebeneffekte zu minimieren.

Eine Teilaufgabe der Erfindung besteht somit darin, eine Anordnung und eine Betriebsweise der Synthesizerbaugruppen zur Verfügung zu stellen, die zu einer möglichst geringen Beeinflussung (Kreuzkopplung) der Transducer eines räumlich mehrkanaligen AOTF/AOM untereinander führt.

Diese Teilaufgabe wird gelöst von einer Ausführungsvariante, bei der die Ansteuersignale für die verschiedenen Kanäle des räumlich mehrkanaligen AOTF/AOM, insbesondere nach einem Einschaltvorgang, relativ zueinander eine konstante Phasenlage, aufweisen. Der Hauptvorteil der Verwendung von mehrkanaligen AOTF besteht in deren vergleichsweise geringer Baugröße, so dass die Beleuchtungsstrahlen nahe beieinander geführt werden können. Dies ermöglicht den Einsatz von vergleichsweise kleinen Komponenten, insbesondere von vergleichsweise kleinen Linsen. Bevorzugt beträgt dabei der laterale Abstand der Lichtstrahlen zwischen 5 und 50 mal und besonders bevorzugt zwischen 8 und 15 mal den Durchmesser der Lichtstrahlen.

Erfindungsgemäß wurde erkannt, dass sich durch das Einstellen einer Differenzphase $\theta_n$ der Signalgeneratoren eine Möglichkeit ergibt, die Isolation zwischen den Kanälen eines räumlich mehrkanaligen AOTF/AOM entscheidend zu verbessern.

Außerdem hat die Erfindung erkannt, dass es vorteilhaft ist, wenn bei jedem Neustart der Synthesizerbaugruppe, das heißt der Baugruppe, welche die Ansteuersignale für die Transducer des räumlich mehrkanaligen AOTF/AOM bereitstellt, eine definierte relative Anfangsphasenlage zwischen den räumlichen Kanälen eingestellt ist. Das ist insbesondere beim Einsatz eines räumlich mehrkanaligen akusto-optischen Elements als Equalizer für Multispotanwendungen bei der parallelisierten Bildaufnahme der in dieser Anmeldung beschriebenen Art von Bedeutung. In diesem Modus überstreicht je ein Teilstrahl einen bestimmten Teil der Probe und generiert ein Teilbild. Das finale Bild wird schließlich durch ein Zusammenfügen der Teilbilder in der Steuer- und Auswerteeinheit zusammengesetzt. Hierbei ist es notwendig, dass alle Teilbilder die gleiche Helligkeit an den Anschlussstellen aufweisen, da ansonsten störende Strukturen im finalen Bild der Probe entstehen. Wenn eine definierte relative Anfangsphasenlage der Ansteuersignale nicht sichergestellt werden kann, können wegen der Wechselwirkungen zwischen den Transducern des räumlich mehrkanaligen akusto-optischen Elements je nach Phasenlage Intensitätsunterschiede in den Kanälen auftreten. Wird durch das akusto-optische Element ein Multiplex aus mehreren Laserlinien mit den Wellenlängen $\lambda$ übertragen, so ist die definierte Differenzphase $\Delta_\theta$ für jede Anregungsfrequenz $f_\lambda$ gesondert einzustellen.

Durch eine geeignete Wahl der Differenzphase $\Delta_\theta$ direkt benachbarter Tranducer können die Wechselwirkungen zwischen den durch sie angeregten Beugungsgittern verringert und somit eine Optimierung der Isolation erreicht werden. Bisherige Messungen haben gezeigt, dass die geringsten Wechselwirkungen auftreten, wenn für die Differenzphase $\Delta_\theta$ gilt:

$$\Delta_\theta = 90º + k \times 180º \text{ (k ist eine ganze Zahl)}$$

Abweichungen von diesem Wert sind möglich und können zum Beispiel durch Laufzeitunterschiede in den Baugruppen zur Signalsynthese und in der Systemverkabelung verursacht werden.

Weitere Verbesserungen sind also möglich bei einem Ausführungsbeispiel der erfindungsgemäßen Vorrichtung und einer Variante des erfindungsgemäßen Verfahrens, bei denen die Anregungssignale des mehrkanaligen AOTF für räumlich benachbarte Kanäle einen relativen Phasenabstand von 90° + n x 180° aufweisen. n ist dabei eine ganze Zahl. Im Rahmen der Erfindung wurde überraschend erkannt, dass bei der Wahl eines solchen Phasenabstands das Übersprechen der Signale von benachbarten Kanälen des mehrkanaligen AOTF besonders gering ist. Für die Beleuchtung des räumlich mehrkanaligen AOTF/AOM wird der Beleuchtungslichtstrahl mittels einer optischen Trenneinrichtung in mehrere Beleuchtungsteilstrahlen aufgespalten.

Für die Trenneinrichtung kann grundsätzlich jede Komponente eingesetzt werden, mit welcher die gewünschte Auftrennung des Beleuchtungsstrahls bewerkstelligt werden kann. Diese Komponenten können insbesondere brechende oder beugende Komponenten sein. Besonders bevorzugt sind Ausführungsvarianten, bei denen die Trenneinrichtung mindestens einen Wellenleiterchip aufweist. Wellenleiterchips sind kommerziell erhältliche Komponenten.

Ein besonders bevorzugtes Ausführungsbeispiel der erfindungsgemäßen Vorrichtung ist dadurch gekennzeichnet, dass die Steuer- und Auswerteeinheit eingerichtet ist zum aufeinander abgestimmten Ansteuern des Strahlmanipulationsmittels in einem bestimmten Beleuchtungsteilstrahl einerseits und des spektralen Auswahlmittels in demjenigen Detektionsteilstrahl, der von dem durch den bestimmten Beleuchtungsteilstrahl auf der Probe erzeugten Leuchtfleck ausgeht, andererseits. In verfahrensmäßiger Hinsicht können bevorzugt die Strahlmanipulationsmittel in einem bestimmten Beleuchtungsteilstrahl einerseits und die spektralen Auswahlmittel in demjenigen Detektionsteilstrahl, der von dem durch den bestimmten Beleuchtungsteilstrahl auf der Probe erzeugten Leuchtfleck ausgeht, andererseits, aufeinander abgestimmt angesteuert werden. Bei diesem Ausführungsbeispiel kommen die erfindungsgemäßen Vorteile in besonderer Weise zum Tragen. Sowohl auf der Beleuchtungsseite und darauf abgestimmt auf der Detektionsseite wird eine spektrale Selektion ausgeführt. Die Komplexität der detektionsseitigen Filtersysteme kann damit erheblich reduziert werden. Damit einhergehend kann eine hohe optische Transmission der Filteranordnung gewährleistet werden.

Besonders zweckmäßig und vorteilhaft kann diese Ausführungsvariante dadurch weitergebildet sein, dass die Steuer- und Auswerteeinheit eingerichtet ist zum Ansteuern des Strahlmanipulationsmittels und des spektralen Auswahlmittels zum Nachweis mindestens eines, insbesondere genau eines, bestimmten Fluoreszenzfarbstoffs auf oder in der Probe. In verfahrensmäßiger Hinsicht können bevorzugt die spektrale Zusammensetzung des Beleuchtungslichts in dem Beleuchtungsteilstrahl eingestellt und das spektrale Auswahlmittel in dem Detektionsteilstrahl angesteuert werden zum Nachweis mindestens eines bestimmten, insbesondere genau eines, Fluoreszenzfarbstoffs. Die einzelnen Fluoreszenzfarbstoffe können deshalb mit der erfindungsgemäßen Vorrichtung und dem erfindungsgemäßen Verfahren besonders gut getrennt werden. Außerdem kann die Vorrichtung zum Nachweis bestimmter Fluoreszenzfarbstoffe gezielt eingestellt werden. Insbesondere können auch spektral überlappende Bänder detektiert werden.

Als ansteuerbare spektrale Auswahlmittel können grundsätzlich alle Komponenten zum Einsatz kommen, mit denen das Auswählen der für die Detektion gewünschten spektralen Anteile des Detektionslichts bewerkstelligt werden kann. Beispielsweise können die Auswahlmittel mindestens einen Farbfilter und/oder mindestens ein dispersives Mittel, insbesondere ein brechendes Mittel, beispielsweise ein Prisma, und/oder ein beugendes Mittel, beispielsweise ein Beugungsgitter in Kombination mit spiegelnden Elementen, aufweisen. Im Wesentlichen soll in der Fluoreszenzmikroskopie, für welche die Erfindung vorteilhaft eingesetzt werden kann, Emissionslicht der verwendeten Farbstoffe detektiert oder nachgewiesen werden.

Bei einer bevorzugten Ausführungsvariante weisen die Auswahlmittel eine Mehrzahl von Farbfiltern auf. Diese können beispielsweise Farbverlaufsfilter sind. Die steuerbaren Auswahlmittel können beispielsweise für alle Detektionsteilstrahlen gleich sein. Farbverlaufsfilter sind Komponenten, bei denen einkommendes Licht reflektiert wird, wenn die Wellenlänge dieses Lichts kleiner ist als eine Grenzwellenlänge und transmittiert wird, wenn die Wellenlänge des einkommenden Lichts größer ist als die Grenzwellenlänge oder umgekehrt. Als Farbverlaufsfilter werden diese Komponenten deshalb bezeichnet, weil die Grenzwellenlänge je nach Auftreffpunkt des einfallenden Lichts auf diesen Komponenten verschieden ist, und sich insbesondere mit der Auftreffposition des Lichts kontinuierlich verändert. Durch Verschieben dieser Farbverlaufsfilter kann deshalb in vorteilhafter Weise die Grenzwellenlänge kontinuierlich eingestellt werden. Überdies können auch diskrete Farbteiler oder einstellbare (tunebare) Farbteiler zum Einsatz kommen, deren wellenlängenselektives Verhalten von deren Winkelausrichtung relativ zur optischen Achse abhängt (als Beispiel seien hier die kommerziell erhältlichen VersaChrome-Filter der Firma Semrock genannt). Allerdings sind an dieser Stelle auch drehbare Filter einsetzbar, welche in unterschiedlichen Drehstellungen unterschiedliche spektrale Eigenschaften aufweisen.

Wenn in einem Probenbereich nur ein einziger Farbstoff abgetastet wird, kann es bevorzugt sein, wenn die Strahlmanipulationsmittel so angesteuert werden, dass die spektrale Zusammensetzung für alle Beleuchtungsteilstrahlen gleich ist. Damit kann entweder eine raschere Aufnahme eines Probenbereichs oder eine Aufnahme mit besserem Signal-Rausch-Verhältnis erreicht werden.

Alternativ oder ergänzend können die steuerbaren Auswahlmittel in allen Detektionsteilstrahlen gleich sein und/oder gleich eingestellt werden.

Die erfindungsgemäße Vorrichtung kann also so konfiguriert werden, dass Multispot-Scanning-Mikroskopie mit einer Mehrzahl von prinzipiell identischen Beleuchtungsteilstrahlen und Detektionsteilstrahlen durchgeführt werden kann.

Bei einer weiteren bevorzugten Variante des erfindungsgemäßen Verfahrens werden die Strahlmanipulationsmittel so angesteuert, dass jeder Beleuchtungsteilstrahl eine unterschiedliche spektrale Zusammensetzung aufweist. Diese Variante kann zum Einsatz kommen, wenn in einem Probenbereich mehrere Farbstoffe gleichzeitig nachgewiesen werden sollen.

Auch Mischformen der beschriebenen Varianten sind möglich und können vorteilhaft sein. Das heißt, es können beispielsweise bei insgesamt vier Beleuchtungsteilstrahlen jeweils zwei dieser Teilstrahlen dasselbe Beleuchtungsspektrum aufweisen. Entsprechend können die zu den Beleuchtungsteilstrahlen gehörenden Detektionsteilstrahlen und die dort befindlichen Strahlmanipulationsmittel jeweils gleich eingestellt werden. Prinzipiell wären bei solch einer Anordnung jeweils zwei identische Beleuchtungsteilstrahlen und nachfolgende Detektionsteilstrahlen vorhanden.

Diese Anordnung kann probenabhängig derart optimiert werden, bzw. sich selbst optimieren, dass eine deutliche Erhöhung der Scangeschwindigkeit und/oder eine Verminderung der Photoschädigung und/oder eine Vermeidung von spektralen Kreuzanregungen und/oder eine Erhöhung des Signal-zu-Rausch-Verhältnisses erreicht wird.

Eine bevorzugte Ausgestaltung des erfindungsgemäßen Verfahrens zeichnet sich schließlich dadurch aus, dass aus den jeweils detektierten Detektionsteilstrahlen ein resultierendes Bild zur Lösung einer Messaufgabe berechnet, erzeugt und/oder dargestellt wird.

Damit wird eine flexible optische Anordnung für verschiedene Messaufgaben in der biomedizinischen Bildgebung zur Verfügung gestellt. Gleichzeitig wird ein neues spektral selektives Mikroskopieverfahren beschrieben.

Weitere Vorteile, Merkmale und Eigenschaften der Erfindung werden im Folgenden mit Bezug auf die beigefügten Figuren beschrieben. Hierin zeigen:

Fig. 1 : eine schematische Darstellung einer erfindungsgemäßen Vorrichtung;

Fig. 2 : ein Ausführungsbeispiel von spektralen Auswahlmitteln, wie sie bei der erfindungsgemäßen Vorrichtung und dem erfindungsgemäßen Verfahren zum Einsatz kommen können;

Fig. 3 : die spektralen Auswahlmittel aus Fig. 2 in einem anderen Betriebszustand; und

Fig. 4 : eine schematische Darstellung eines mehrkanaligen AOTF, der als steuerbares Strahlmanipulationsmittel im Beleuchtungsstrahlengang der erfindungsgemäßen Vorrichtung zum Einsatz kommen kann.

Das Grundprinzip für die Messung mit der erfindungsgemäßen Vorrichtung beruht auf einem Laser-Scanning-Mikroskop. Die optische Anordnung des Mikroskops ist so ausgeführt, dass ein Betrieb in einem parallelen Modus optisch gegeben ist. Entscheidend ist, dass mehrere Beleuchtungslichtstrahlen in das Mikroskop eingekoppelt werden können.

Zur spektralen Beleuchtung können diesem Mikroskop eine bestimmte Anzahl von Laserlinien angeboten werden. Zunächst spielt es keine Rolle, ob es sich dabei um diskrete Laserlinien handelt, um einen durchstimmbaren Laser oder einen sogenannten Weißlichtlaser. Zudem ist es unerheblich, ob die Laser kontinuierlich oder gepulst sind. Schließlich ist die Einsatzfähigkeit der Erfindung nicht auf bestimmte Anregungsmechanismen, wie beispielsweise die gewöhnliche Fluoreszenzanregung beschränkt. Es können ebenso nichtlineare Prozesse, insbesondere Zwei-Photonen-Prozesse, wie bei der Zwei-Photonen-Fluoreszenz oder bei CARS-Mikroskopie, zum Einsatz kommen. Diese spektralen Komponenten können insbesondere mit Hilfe eines sogenannten Hauptfarbteilers in den Strahlengang des Mikroskops eingespiegelt werden. Dafür muss der Hauptfarbteiler alle in das Mikroskop einzukoppelnden Wellenlängen unterstützen. Das heißt, dass der Hauptfarbteiler für alle einzukoppelnden Wellenlängen als Spiegel fungieren muss. Das ist zum Beispiel möglich mit Dichroiten. Es ist aber hier auch möglich, mehrere Hauptfarbteiler in ihrer Wirkung zu kombinieren und in dem spektral aufgetrennten Raum einen oder beide Strahlen zu manipulieren. Weiterhin kann an dem Hauptfarbteiler das Detektionslicht abgetrennt werden. Neben den klassischen dichroitischen Strahlteilern sind aber auch weitere Methoden der Wellenlängentrennung zwischen Anregung und Detektion möglich. Somit kann auch ein sogenannter Akusto-optischer Strahlteiler (AOBS) zum Einsatz kommen.

Herkömmlich wird in der Laser-Scanning-Mikroskopie das Objekt mit nur einem Laserpunkt abgetastet. Allerdings sind auch andere Anordnungen, beispielsweise linienscannende Systeme, bekannt. Bei der vorliegenden Erfindung soll das Anregungslicht derart in die Probe eingebracht werden, dass mehrere Beleuchtungsspots das Objekt abrastern. Hierzu muss das von der Laserquelle kommende Licht räumlich aufgespalten werden. Im Folgenden wird eine optische Anordnung beschrieben, die mehrere Beleuchtungsspots zur Abtastung der Probe bereitstellt. Dabei sind diese Beleuchtungsspots erfindungsgemäß einzeln sowohl in ihrer Intensität als auch in ihrer Farbe einstellbar.

Weiterhin können die einzelnen Strahlen auch einzeln moduliert werden. Besonders bevorzugt ist die Strahlqualität der einzelnen Beleuchtungsteilstrahlen sehr hoch, was eine Grundvoraussetzung für ein Laser-Scanning-Mikroskop darstellt, wenn eine hohe Bildqualität erzielt werden soll.

Gleich und gleichwirkende Komponenten sind in allen Figuren in der Regel mit demselben Bezugszeichen versehen.

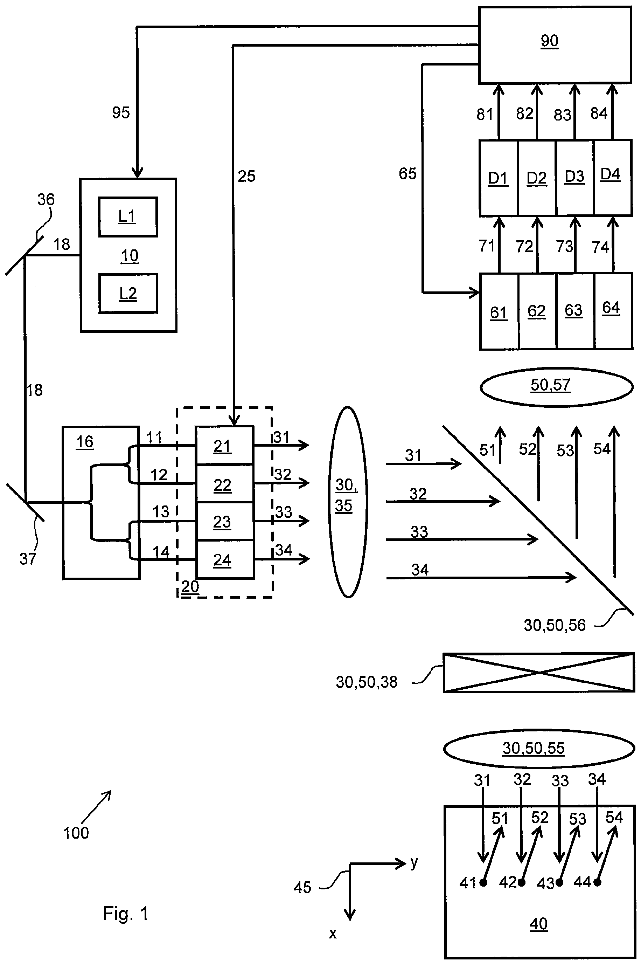

Das in Fig. 1 schematisch dargestellte Ausführungsbeispiel einer erfindungsgemäßen Vorrichtung 100 weist folgende wesentliche Bestandteile auf: Eine mehrfarbige Lichtquelle 10 zum Bereitstellen mindestens eines Beleuchtungslichtstrahls 18, eine Trenneinrichtung 16 zum Auftrennen des Beleuchtungslichtstrahls in mehrere Beleuchtungsteilstrahlen 11, 12, 13, 14, erste Optikmittel 30, 35, 56, 38, 55 zum Bereitstellen eines Beleuchtungsstrahlengangs zum Leiten und Fokussieren der einzelnen Beleuchtungsteilstrahlen 11, 12, 13, 14, 31, 32, 33, 34 jeweils in einen Leuchtfleck 41, 42, 43, 44 auf oder in einer zu untersuchenden Probe 40.

Sodann ist eine Scaneinheit 38 (als Teil der ersten Optikmittel 30) zum Führen der Leuchtflecke 41, 42, 43, 44 über die Probe 40 und eine Detektionseinheit, welche Detektoren D1 bis D4 aufweist, zum Nachweisen von Detektionslicht, welches die Probe 40 in Detektionsteilstrahlen 51, 52, 53, 54 nach Bestrahlen mit den einzelnen Beleuchtungsteilstrahlen 31, 32, 33, 34 abstrahlt, vorhanden.

Weiterhin weist die Vorrichtung 100 zweite Optikmittel 50 zum Bereitstellen eines Detektionsstrahlengangs zum Leiten der Detektionsteilstrahlen 51, 52, 53, 54 auf die Detektoreinheit und schließlich eine Steuer- und Auswerteeinheit 90 zum Ansteuern der Scaneinheit 38 und zum Auswerten des von der Detektionseinheit nachgewiesenen Detektionslichts auf. Die ersten optischen Mittel 30 und die zweiten optischen Mittel 50 können teilweise dieselben optischen Komponenten, insbesondere ein Mikroskopobjektiv, aufweisen. Die Scaneinheit 38 kann beispielsweise ein herkömmlieher x-y-Scanner mit galvanometrischen Spiegeln sein. Die Lichtquelle 10 kann von der Steuer- und Auswerteeinheit 90 über eine Verbindung 95 angesteuert werden.

Erfindungsgemäß sind außerdem im Beleuchtungsstrahlengang steuerbare Strahlmanipulationsmittel 21, 22, 23, 24 vorhanden, mit denen eine spektrale Zusammensetzung des jeweiligen Beleuchtungsteilstrahls 11, 12, 13, 14 jeweils unabhängig eingestellt werden kann. Die steuerbaren Strahlmanipulationsmittel 21, 22, 23, 24 sind in dem in Fig. 1 gezeigten Ausführungsbeispiel schematisch zu einer steuerbaren Strahlmanipulationseinrichtung 20, welche ebendiese Strahlenmanipulationsmittel 21, 22, 23, 24 enthält, zusammengefasst. Weiterhin sind erfindungsgemäß im Detektionsstrahlengang steuerbare spektrale Auswahlmittel 61, 62, 63, 64 vorhanden, mit denen eine spektrale Zusammensetzung von Detektionslicht, welches über den jeweiligen Detektionsteilstrahl 51, 52, 53, 54, 71, 72, 73, 74 auf die Detektionseinheit gelangt, unabhängig beeinflusst werden kann.

Bei der mehrfarbigen Lichtquelle 10 kann es sich insbesondere um eine Lasereinheit mit einer Mehrzahl von Laserquellen, wie im gezeigten Beispiel L1 und L2, handeln. Der von der Lichtquelle 10 ausgesandte Beleuchtungslichtstrahl 18 gelangt im gezeigten Beispiel über Spiegel 36, 37 auf die Trenneinrichtung 16, bei der es sich insbesondere um einen Wellenleiterchip handeln kann. Die Einkopplung des Beleuchtungslichtstrahls 18 in die Trenneinrichtung 16 kann beispielsweise mit Hilfe einer optischen Faser erfolgen, die mit der Trenneinrichtung optisch und mechanisch verbunden ist. Die Strahlung, die aus der Faser austritt, wird so in die Trenneinrichtung eingekoppelt. Allerdings ist auch eine Freistrahlkopplung möglich. Die Trenneinrichtung 16 wird genutzt, um eine Aufteilung des Beleuchtungslichtstrahls 18 auf beispielsweise $2^n$ Teilstrahlen zu realisieren. Mit dem Buchstaben n wird dabei die Anzahl der Teilungskaskaden innerhalb der Trenneinrichtung 16, beispielsweise also innerhalb des Wellenleiterchips, bezeichnet.

In jeder Kaskade kann dabei mit Hilfe von sogenannten y-Teilern das Licht eines Pfads jeweils zu nahezu gleichen Teilen auf zwei neue Pfade aufgeteilt werden. Aus ebendiesem Grund ist eine Aufteilung auf $2^n$ Teilstrahlen aus Effizienzgründen zu bevorzugen. Prinzipiell kann aber jede beliebige Anzahl an Strahlen generiert werden, beispielsweise indem nicht benötigte Teilstrahlen ab- oder ausgeblendet werden.

Strahlteiler mit dieser Funktionalität sind aus der Nachrichtentechnik bekannt. Dort sind die optischen Verhältnisse aber dahingehend einfacher, als man nur eine Wellenlänge, beispielsweise 1.300 nm oder 1.550 nm, betrachten muss.

Im Rahmen der Vorarbeiten zur vorliegenden Erfindung wurde erkannt, dass insbesondere Strahlteiler auf der Basis von Schichtwellenleitern vorteilhaft in der Mikroskopie eingesetzt werden können und dass auch die hohen Anforderungen, insbesondere im Hinblick auf die spektrale Breitbandigkeit, erfüllt werden können. Beispielsweise wurde erkannt, dass es möglich ist, die jeweiligen Intensitäten des Beleuchtungslichts über alle Wellenlängen besser als 50%, sogar besser als 25% oder schließlich sogar besser als 10% untereinander abzugleichen. Je besser dieser spektrale Intensitätsabgleich über die einzelnen Beleuchtungsteilstrahlen erfolgt, desto effizienter kann die Laserquelle für die beschriebene Anwendung genutzt werden. Allerdings kann auch ein Strahlteiler mit einem nichtperfekten Abgleich für die erfindungsgemäße Vorrichtung und das erfindungsgemäße Verfahren eingesetzt werden und die Bildqualität kann auch mit solchen Strahlteilern verbessert werden.

Beispielsweise kann ein sogenannter Mittelungsscan durchgeführt werden. Bei dieser Betriebsart wird ein interessierender Bereich einer Probe von jedem der Beleuchtungsteilstrahlen vollständig abgerastert und nachfolgend wird aus allen Einzelbildern ein gemitteltes Bild berechnet. Für eine solche Mittelung ist ein perfekter Abgleich der Strahlen untereinander nicht zwingend notwendig. Allerdings kann diese zunächst passive Strahlgenerierung noch deutlich verbessert und somit schließlich wesentlich breiter eingesetzt werden.

Das kann entweder auf der Trenneinrichtung 16, beispielsweise also dem Wellenleiterchip direkt, erfolgen, indem verschiedene Lichtpfade in ihrer Intensität beeinflusst werden. Hierzu sind integrierte optische Schaltungen, wie zum Beispiel sogenannte Mach-Zehnder-Interferometer bekannt. Dabei wird eine Phasenverschiebung zwischen den Lichtpfaden eines Mach-Zehnder-Interferometers dazu genutzt, die Leistung am Ausgang dieses Interferometers auf dem Chip einzustellen. Damit kann rasch, beispielsweise innerhalb von wenigen Millisekunden, ein Abgleich der optischen Ausgänge der Trenneinrichtung erreicht werden.

Bei dem in Fig. 1 schematisch dargestellten Ausführungsbeispiel ist der Trenneinrichtung 16 die Strahlmanipulationseinheit 20, die als zweite Stufe bezeichnet werden kann, nachgeschaltet. In dieser zweiten Stufe befindet sich für jeden Beleuchtungsteilstrahl 11, 12, 13, 14 ein steuerbares Strahlmanipulationsmittel 21, 22, 23, 24. Diese steuerbaren Strahlmanipulationsmittel können auch als spektralselektiv arbeitende Elemente bezeichnet werden und es kann mit diesen für jede Beleuchtungsteilstrahl 11, 12, 13, 14 sowohl die Intensität als auch die spektrale Zusammensetzung eingestellt werden.

Bei einer besonders bevorzugten Ausführungsvariante kann als steuerbare Strahlmanipulationseinheit 20 ein sogenannter AOTF (Acusto-Optical Tunable Filter) verwendet werden. Dabei kann zunächst eine optische Anbindung der Trenneinrichtung 16 an diesen AOTF erfolgen. Beispielsweise geschieht das über eine geeignete Freistrahloptik. Grundsätzlich sind aber auch Ankopplungen über Faserbündel und direkt gekoppelte steuerbare Strahlmanipulationsmittel, beispielsweise direkt gekoppelte AOTFs, möglich.

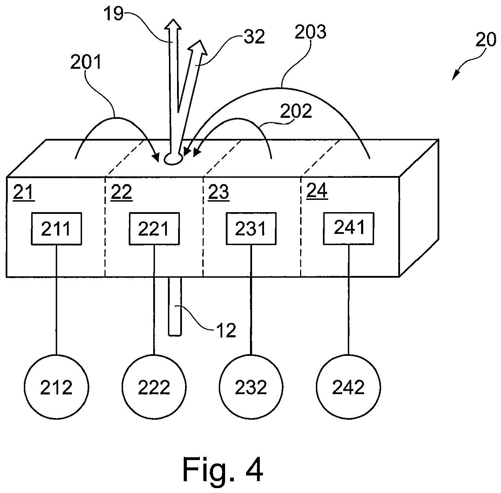

Die steuerbaren Strahlmanipulationsmittel 21, 22, 23, 24 sind so gestaltet, dass jeder der Beleuchtungsteilstrahlen 11, 12, 13, 14 einzeln und unabhängig von den anderen Beleuchtungsteilstrahlen 11, 12, 13, 14 beeinflusst oder, mit anderen Worten, moduliert werden kann. Ein Beleuchtungsteilstrahl zusammen mit dem zugehörigen steuerbaren Manipulationsmittel 21, 22, 23, 24 wird dabei auch als einzelner räumlicher Kanal bezeichnet. Bei Nutzung eines AOTF kann man zum Beispiel bis zu acht Farben in einem räumlichen Kanal bearbeiten. Beispielsweise kann ein AOTF mit verschiedenen Kristallen, die beispielsweise im Wesentlichen aus $TeO_2$ bestehen, oder es kann ein einziger Kristall mit segmentierten Transducerelektroden verwendet werden. Jeder Beleuchtungsteilstrahl kann dann dabei einzeln in seiner Intensität beeinflusst werden. Außerdem können die Auswahl der jeweiligen Wellenlängen des Lichts und deren spektrale Intensität in dem betreffenden Beleuchtungsteilstrahl einzeln, individuell und unabhängig von den anderen Beleuchtungsteilstrahlen, eingestellt werden. Wegen dieser Eigenschaften wird die Anordnung und werden solche steuerbaren Strahlmanipulationsmittel als räumlicher Wellenlängenselektor bezeichnet. Diese technischen Sachverhalte werden weiter unten mit Bezug auf Fig. 4 näher erläutert.

Durch Einwirkung der steuerbaren Strahlmanipulationsmittel 21, 22, 23, 24, die jeweils in den Beleuchtungsteilstrahlen 11, 12, 13, 14 angeordnet sind, entstehen die Beleuchtungsteilstrahlen 31, 32, 33, 34. Dabei entsteht der Beleuchtungsteilstrahl 31 durch Einwirkung des steuerbaren Strahlmanipulationsmittels 21 auf den Beleuchtungsteilstrahl 11. Entsprechendes gilt für die weiteren Beleuchtungsteilstrahlen 32, 33, 34. Die Beleuchtungsteilstrahlen 31, 32, 33, 34 werden sodann mit ersten optischen Mitteln 30, im gezeigten Beispiel konkret mit optische Komponenten, die als stilisierte Linse 35 dargestellt sind, einem Hauptfarbteiler 56, der Scaneinrichtung 38 und einem Mikroskopobjektiv 55, auf eine Probe 40 geführt. Der Beleuchtungsteilstrahl 31 wird dabei in einen Leuchtfleck 41, der auch als Fokalpunkt bezeichnet werden kann, auf oder in der zu untersuchenden Probe 40 geleitet und fokussiert. Die weiteren Beleuchtungsteilstrahlen 32, 33, 34 werden in entsprechender Weise auf die Leuchtflecke 42, 43 beziehungsweise 44 geleitet und fokussiert. Bei den optischen Mitteln 30 handelt es sich um grundsätzlich bekannte Komponenten, welche in der Multispot-Scanning-Mikroskopie zum Einsatz kommen.

Besonders bevorzugt wird die Scaneinheit 38 in einer Pupille des Strahlengangs angeordnet. Bei der in Fig. 1 schematisch gezeigten Situation liegen die Leuchtflecke 41, 42, 43, 44 in einer y-Richtung (bezogen auf das Koordinatensystem 45 in Fig. 1) versetzt. Ein Scannen der Probe 40 kann dabei beispielsweise so erfolgen (dann nämlich, wenn die Spektren der vier Beleuchtungsstrahlen alle verschieden sind), dass die Leuchtflecke 41, 42, 43, 44 sich zeilenweise von links nach rechts bewegen (in Fig. 1 also von oben nach unten, weil die Zeilen in x-Richtung verlaufen, siehe Koordinatensystem 45) und dass nach Vollendung einer Zeile alle vier Leuchtflecke um eine Zeile nach unten (in Fig. 1 also nach links) springen. Prinzipiell sind dabei aber beliebige Varianten möglich. So müssen beispielsweise nicht alle Leuchtflecke 41, 42, 43, 44 auf jeden Probenort geführt werden. Beispielsweise kann bei dem soeben beschriebenen Beispiel nach Vollendung einer Zeile auch mit allen vier Leuchtflecken um vier Zeilen nach unten gesprungen werden. Diese Variante ist bevorzugt, wenn die Spektren der vier Beleuchtungsstrahlen alle gleich sind. Im Allgemeinen sollten bei verschiedenen Spektren alle Abtastspots jeden Ort in der Probe scannen. Die Reihenfolge ist allerdings beliebig. Ebenso sind Varianten möglich, bei denen die Leuchtflecke 41, 42, 43, 44 in einer Scanrichtung hintereinander geführt werden. Es sind im Grunde beliebige Scantrajektorien möglich, solange die Berechnung des endgültigen Bilds diese Trajektorien berücksichtigt. In dieser Vielfalt der möglichen Varianten manifestiert sich ein wesentlicher Vorteil der Multispot-Scanning-Mikroskopie.

Auf die Beaufschlagung der zu untersuchenden Probe 40 mit den einzelnen Leuchtflecken 41, 42, 43, 44 sendet die Probe in Detektionsteilstrahlen 51, 52, 53, 54 Detektionslicht aus, wobei der Detektionsteilstrahl 51 von dem Leuchtfleck 41 ausgeht und in entsprechender Weise die Detektionsteilstrahlen 52, 53, 54 von den Leuchtflecken 42, 43 beziehungsweise 44 ausgehen. Weil die Beleuchtungsteilstrahlen 31, 32, 33, 34 grundsätzlich eine jeweils verschiedene spektrale Zusammensetzung, also bei unterschiedlichen Wellenlängen unterschiedliche Intensitäten aufweisen können, wird sich deshalb auch das Detektionslicht in den einzelnen Detektionsteilstrahlen 51, 52, 53, 54 selbst bei unterstellter Gleichartigkeit der zu untersuchenden Probe 40 in den von den Leuchtflecken 41, 42, 43, 44 beleuchteten Bereichen unterscheiden.

Die Detektionsteilstrahlen 51, 52, 53, 54 werden sodann bei der erfindungsgemäßen Vorrichtung 100 mit Hilfe von zweiten Optikmitteln 50, 55, 38, 56, 57 auf steuerbare spektrale Auswahlmittel 61, 62, 63, 64 geführt. Im Einzelnen werden die Detektionsteilstrahlen 51, 52, 53, 54 zurück über das Mikroskopobjektiv 55 und die Scaneinheit 38 auf den Hauptfarbteiler 56 geführt. Der Hauptfarbteiler 56 ist zweckmäßig so ausgelegt, dass er rotverschobene Fluoreszenzanteile in den Detektionsteilstrahlen 51, 52, 53, 54 transmittiert. Über weitere optische Komponenten, die schematisch als stilisierte Linse 57 dargestellt sind, gelangen die Detektionsteilstrahlen 51, 52, 53, 54 dann auf die steuerbaren spektralen Auswahlmittel 61, 62, 63, 64.

Der Detektionsteilstrahl 41 trifft dabei auf das steuerbare spektrale Auswahlmittel 61 und entsprechend treffen die Detektionsteilstrahlen 52, 53, 54 auf die steuerbaren spektralen Auswahlmittel 62, 63 beziehungsweise 64. Bei den steuerbaren spektralen Auswahlmitteln handelt es sich allgemein um Einrichtungen, die in irgendeiner Weise die einkommende oder einfallende elektromagnetische Strahlung, insbesondere Licht, manipulieren. Dabei können unterschiedliche physikalische Effekte, wie Absorption, Streuung, Brechung und Beugung wirksam werden. Insbesondere kann auch die dispersive Wirkung über die Wellenlängenabhängigkeit der Brechung, zum Beispiel in einem optischen Prisma, und/oder über die Wellenlängenabhängigkeit der Reflexion, beispielsweise in einem Spiegel, wirksam werden. Besonders bevorzugt werden als steuerbare spektrale Auswahlmittel 61, 62, 63, 64 einstellbare Filter, insbesondere Verlaufsfilter, verwendet.

Die Ansteuerung der spektralen Auswahlmittel 61, 62, 63, 64 erfolgt über schematisch angedeutete Verbindungen, insbesondere elektrische Leitungsverbindungen 65 mit der Steuer- und Auswerteeinheit 90. Die Steuer- und Auswerteeinheit 90 steuert außerdem über eine Verbindung 25, insbesondere eine elektrische Leitungsverbindung, die steuerbaren Strahlmanipulationsmittel 21, 22, 23, 24 im Beleuchtungsstrahlengang an.

Durch Einwirkung der steuerbaren spektralen Auswahlmittel 61, 62, 63, 64 auf die Detektionsteilstrahlen 51, 52, 53, 54 entstehen aus diesen Detektionsteilstrahlen die weiteren Detektionsteilstrahlen 71, 72, 73, 74. Im Einzelnen entsteht der Detektionsteilstrahl 71 aus dem Detektionsteilstrahl 51 durch Einwirkung des steuerbaren spektralen Auswahlmittels 61, beispielsweise durch Einwirkung eines Verlaufsfilters. Entsprechendes gilt für die weiteren Detektionsteilstrahlen 52, 53, 54 und 72, 73, 74. Die Detektionseinheit weist zum Nachweisen des Detektionslichts in den verschiedenen Detektionsteilstrahlen 71, 72, 73, 74 Einzeldetektoren D1, D2, D3, D4 auf.

Im Einzelnen wird das Detektionslicht im Detektionsteilstrahl 71 durch den Detektor D1 nachgewiesen. Entsprechend wird das Detektionslicht in den Detektionsteilstrahlen 72, 73, 74 mit den Einzeldetektoren D2, D3 beziehungsweise D4 nachgewiesen. Der Einzeldetektor D1 gibt das nachgewiesene Detektionslicht als Ausgangssignal 81 an die Steuer- und Auswerteeinheit 90. Entsprechend liefern die Einzeldetektoren D2, D3 und D4 Ausgangssignale 82, 83 beziehungsweise 84 an die Steuer- und Auswerteeinheit 90. Die Steuer- und Auswerteeinheit 90 wertet das von der Detektionseinheit, im Einzelnen also das von den Einzeldetektoren D1, D2, D3, D4 nachgewiesene Detektionslicht aus. Als Steuer- und Auswerteeinheit 90 dient üblicherweise ein Rechner.

Bei der erfindungsgemäßen Vorrichtung und dem erfindungsgemäßen Verfahren wird also mit einer Anordnung, bei der bereits grundsätzlich jeder Leuchtfleck in seiner spektralen Zusammensetzung individuell eingestellt werden kann, eine damit korrespondierende spektral selektive Detektion vorgenommen. Besondere Vorteile sind dabei möglich, wenn die spektrale Detektion, mit anderen Worten also die steuerbaren spektralen Auswahlmittel 61, 62, 63, 64, wie beschrieben, aus Filtern, beispielsweise Verlaufsfiltern, aufgebaut sind. Spektrale Filter dieser Art sind beispielsweise beschrieben in DE 10 2006 034 908 A1. Filterbasierte Anordnungen bieten eine preisgünstige und effektive Möglichkeit der spektralen Detektion.

Zudem erlauben filterbasierte Anordnungen die abtastende Messung der Punktverteilungsfunktion (PSF) mit einer hohen optischen Güte. Dies kann für Verfahren, wie zum Beispiel durch das sogenannte virtual pinhole (siehe hierzu: Handbook of Biological Confocal Mikroscopy, J. B. Pawley, 3. überarbeitete Auflage, 2010) oder die ortsaufgelöste Messung der Punktverteilungsfunktion zur Steigerung der Detektionseffizienz und der optischen Auflösung genutzt werden. Grundsätzlich gibt es auch dispersive, also auf Grundlage der wellenlängenabhängigen Beugung oder Brechung arbeitende Anordnungen, die Ähnliches leisten. Auch diese können derart ausgestaltet werden, dass eine Erhaltung der Detektions-PSF gegeben ist. Ein vorteilhafter Einsatz in Kombination mit der räumlich-spektral selektierenden Beleuchtung kann analog dem filterbasierten Ausführungsbeispiel erfolgen.

Andererseits ist die Effizienz solcher Filter wegen ihres komplexen Aufbaus immer begrenzt. Es ist, mit anderen Worten, ineffizient, wenn man mehrere dieser Filter hintereinander setzen würde. Eine sinnvolle und lichteffiziente Aufteilung auf drei verschiedene Wellenlängenbänder mit zwei hintereinander geschalteten Verlaufsfiltern ist dabei aber noch sinnvoll und sehr gut möglich. Weitere Filter auf demselben optischen Strahl, also auf demselben Detektionsteilstrahl, würden die damit einhergehenden Ausgänge der Detektionseinheit immer ineffizienter machen. Das allerdings steht im Gegensatz zu einer immer breiter werdenden Palette von Fluoreszenzfarbstoffen, die mit heutigen Lasermikroskopen gemessen werden sollen. Die Messungen sollen schnell und räumlich hochpräzise erfolgen. Gewünscht ist insbesondere, dass die Messungen simultan in nur einem einzigen Scan erfolgen. Dabei sollen in vielen Fällen mehr als drei spektrale Kanäle messbar sein.

Der Vorteil liegt dabei darin, dass es kein Übersprechen von Signalen von verschiedenen, mit Farbstoffen markierten Strukturen gibt. Allerdings können Bewegungen der zu untersuchenden Probe zu Artefakten führen, beispielsweise bei der Messung von sogenannten Kolokalisationen.

Beim Messen von mehreren Wellenlängen hat man es also mit zwei grundlegenden Problemen zu tun: Einerseits soll eine effiziente spektrale Detektion für alle Wellenlängen bewerkstelligt werden und andererseits soll ein spektrales Übersprechen durch Queranregung in der Probe oder eine spektrale Fehlzuordnung bei der Detektion nach Möglichkeit vermieden werden.

In diesem Zusammenhang schaffen die erfindungsgemäße Vorrichtung und das erfindungsgemäße Verfahren wesentliche Verbesserungen. Die erfindungsgemäß vorhandenen steuerbaren Strahlmanipulationsmittel 21, 22, 23, 24, mit welchen für jeden Beleuchtungsteilstrahl eine spektrale Zusammensetzung, worunter für die vorliegende Erfindung auch die jeweiligen Intensitäten verstanden werden sollen, individuell und unabhängig von den anderen Beleuchtungsteilstrahlen eingestellt werden kann, können in Kombination mit der spektralselektiven Detektion zu einem sehr effizienten und spektralsensitiven Mikroskop kombiniert werden.

Dies geschieht in der Weise, dass die Detektion und die Anregung über den Wellenlängenselektor auf eine jeweilige Messaufgabe des Mikroskops optimal eingestellt werden. Dabei können verschiedene Bildgebungsmodi unterschieden werden, die die oben benannten Probleme in der jeweils besten Konfiguration lösen.

Für die vorliegende Beschreibung wird die Gesamtheit der Komponenten Lichtquelle 10, Trenneinrichtung 16 und steuerbare Strahlmanipulationseinrichtung 20 mit der Ansteuerung über die Verbindung 25 durch die Steuer- und Auswerteeinheit 90 auch als räumlicher Wellenlängenselektor oder kurz Selektor bezeichnet.

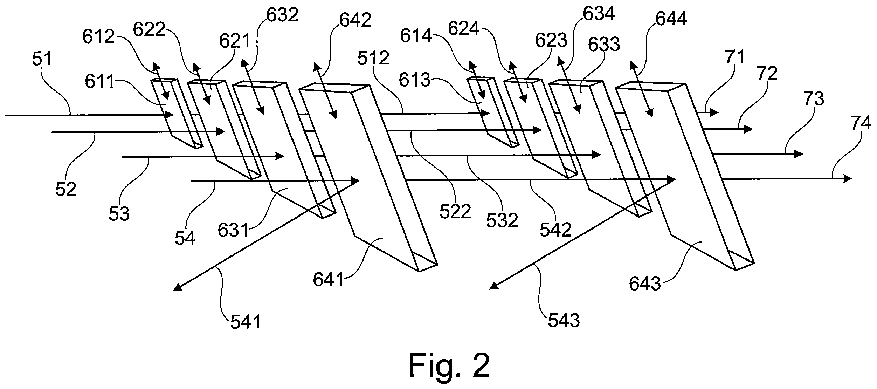

Im Folgenden soll eine Anwendung der erfindungsgemäßen Vorrichtung und des erfindungsgemäßen Verfahrens beschrieben werden, bei welchen die Aufnahmegeschwindigkeit maximiert und/oder der jeweils in Kauf zu nehmende Photoschaden der zu untersuchenden Probe minimiert wird. Dazu liefert der Selektor N Strahlen, wobei ein N, das sich aus $2^n$ mit einer ganzen Zahl n darstellen lässt, besonders vorteilhaft, aber nicht notwendig ist. Die steuerbaren spektralen Auswahlmittel, bei denen es sich insbesondere um Filter handeln kann und die deshalb auch als Detektionsfilter bezeichnet werden können, sind in dieser Anregungseinstellung so eingestellt, dass sie jeweils die gleiche spektrale Signatur aufweisen. Dies wird im Folgenden im Zusammenhang mit der Fig. 2 genauer erläutert, wobei aus Gründen der Übersichtlichkeit nicht alle Strahlen in der Anordnung dargestellt sind.

Fig. 2 zeigt einen Ausschnitt aus dem Detektionsstrahlengang in Fig. 1, wobei ein konkretes Ausführungsbeispiel der steuerbaren spektralen Auswahlmittel dargestellt ist. Von links laufen in Fig. 2 die Detektionsteilstrahlen 51, 52, 53, 54 ein und nach rechts treten die durch die steuerbaren spektralen Auswahlmittel beeinflussten Detektionsteilstrahlen 71, 72, 73, 74 in Richtung der Detektionseinheit aus. Die steuerbaren spektralen Auswahlmittel sind für alle vier Detektionsteilstrahlen 51, 52, 53, 54 jeweils durch ein Paar von Verlaufsfiltern gebildet. Im Fall des Detektionsteilstrahls 51 ist dies das Paar der Verlaufsfilter 611 und 613. Entsprechend gehören zu den Detektionsteilstrahlen 52, 53, 54 die Paare der Verlaufsfilter mit den Bezugszeichen 621 und 623, 631 und 633 beziehungsweise 641 und 643. Die Verlaufsfilter können jeweils relativ zu den Detektionsteilstrahlen 51, 52, 53 und 54 in einer Richtung im Wesentlichen quer zu diesen Detektionsteilstrahlen mechanisch verstellt werden. Dieser mechanische Freiheitsgrad ist in Fig. 2 durch die Doppelpfeile 612, 614, 622, 624, 632, 634, 642, 644 dargestellt.

Die Verlaufsfilter 611, 621, 631, 641 funktionieren so, dass Licht mit einer Wellenlänge, die kleiner ist als eine Grenzwellenlänge, reflektiert und Licht mit einer Wellenlänge, die größer ist als die Grenzwellenlänge, dagegen transmittiert wird. Die Grenzwellenlänge kann durch mechanisches Verstellen der Verlaufsfilter jeweils in der durch die Doppelpfeile angedeuteten Richtungen verstellt werden. Für die in Fig. 2 dargestellte Situation wird dies mit Bezug auf den Detektionsteilstrahl 54 näher erläutert. Der in Fig. 2 von links einlaufende Detektionsteilstrahl 54 weist eine bestimmte spektrale Zusammensetzung auf, die im Wesentlichen von der spektralen Zusammensetzung des zugehörigen und vorausgehenden Beleuchtungsteilstrahls 11, 31 im Beleuchtungsstrahlengang sowie den Eigenschaften der zu untersuchenden Probe 40 abhängt. Insbesondere enthält die spektrale Zusammensetzung des Detektionsteilstrahls 54 spezifische Informationen über die in dem mit dem zugehörigen Leuchtfleck 44 beaufschlagten Probenvolumen enthaltenen Fluoreszenzfarbstoffe. Der Detektionsteilstrahl 54 trifft auf den Verlaufsfilter 641 auf, der auf eine bestimmte Grenzwellenlänge eingestellt ist. Das von diesem Verlaufsfilter 641 zurückreflektierte Licht 541 enthält nur die Strahlungsanteile mit Wellenlängen, die kleiner sind als die eingestellte Grenzwellenlänge. Ein von dem Verlaufsfilter 641 transmittierter Anteil 542 des Detektionsteilstrahls 54 enthält im Wesentlichen nur noch Strahlungsanteile mit Wellenlängen, die größer sind als die beim Verlaufsfilter 641 eingestellte Grenzwellenlänge.

Der weitere Verlaufsfilter 643, auf welchen der vom Verlaufsfilter 641 durchgelassene Strahlungsanteil 542 sodann trifft, hat umgekehrte Eigenschaften. Einfallende Strahlung mit Wellenlängen, die größer sind als die bei dem Verlaufsfilter 643 eingestellte Grenzwellenlänge, werden reflektiert, wohingegen Strahlungsanteile mit Wellenlängen, die kleiner sind als die beim Verlaufsfilter 643 eingestellte Grenzwellenlängen, durchgelassen werden. Der nach rechts austretende Detektionsteilstrahl 74 enthält deshalb nur Strahlungsanteile, deren Wellenlängen größer als die Grenzwellenlänge des Verlaufsfilters 641 und kleiner als die Grenzwellenlänge des Verlaufsfilters 643 sind. Der vom Verlaufsfilter 643 zurückgestrahlte Strahlungsanteil 543 enthält nur Wellenlängen, die sowohl größer als die erste Grenzwellenlänge des Verlaufsfilters 641 als auch größer als die Grenzwellenlänge des Verlaufsfilters 643 sind.

Durch die Kombination der Verlaufsfilter 641 und 643 entsteht also im Ergebnis ein Bandpassfilter, der nur Strahlungsanteile durchlässt, deren Wellenlängen zwischen der Grenzwellenlänge des Verlaufsfilters 641 und der Grenzwellenlänge des Verlaufsfilters 643 liegen. Damit überhaupt Strahlung transmittiert wird, ist es zwingend notwendig, dass die Grenzwellenlänge des Verlaufsfilters 643 größer ist als diejenige des Verlaufsfilters 641. Somit erhält man drei detektierbare Wellenlängenbänder in den Ausgängen 541, 543 und 74, wobei in 541 die Anteile mit Wellenlängen kürzer als die Grenzfrequenz des Verlaufsfilters 641, in 543 die Anteile mit Wellenlängen größer als die Grenzwellenlängen von 641 und 643 und in 74 die Anteile mit Wellenlängen zwischen den beiden Grenzwellenlängen detektiert werden können. Das Licht durchläuft also einen Langpass und dann einen Kurzpass. Allerdings kann die Reihenfolge des Durchlaufs auch eine Kurzpass-Langpass-Kombination enthalten.

Die Verlaufsfilter 611 und 613 im Detektionsteilstrahl 51, 71, die Verlaufsfilter 621, 623 im Detektionsteilstrahl 52, 72 und die Verlaufsfilter 631, 633 im Detektionsteilstrahl 53, 73 arbeiten in der gleichen Weise wie die Verlaufsfilter 641 und 643 im Detektionsteilstrahl 54, 74. Die von den Verlaufsfiltern jeweils zurückreflektierten Strahlungsanteile sind aber für die Detektionsteilstrahlen 51, 71, ..., 53, 73 aus Gründen der Übersichtlichkeit nicht im Einzelnen dargestellt. Prinzipiell können die Verlaufsfilter 611, 621, 631 und 641 einerseits und die Verlaufsfilter 613, 623, 633 und 643 andererseits jeweils unterschiedliche Verlaufsfilter sein. Besonders bevorzugt werden aber jeweils gleiche Verlaufsfilter verwendet.

Bei der in Fig. 2 dargestellten Situation sollen die Grenzwellenlängen für die im Detektionsstrahlengang ersten Verlaufsfilter 611, 621, 631, 641 einerseits und die Grenzwellenlängen der im Detektionsstrahlengang nachfolgenden Verlaufsfilter 613, 623, 633, 643 andererseits jeweils gleich sein. Das bedeutet, dass durch die Paare von Verlaufsfiltern 611 und 613, 621 und 623, 631 und 633 sowie 641 und 643 jeweils gleiche Bandpassfilter bereitgestellt werden. Diese Konfiguration kann genutzt werden, um eine Probe in einem sogenannten parallelen Modus abzuscannen. Dabei vermisst jeder Leuchtfleck, der auch als Abtastspot bezeichnet werden kann, nur einen Teil der Probe. Beispielsweise können vier vertikal untereinanderliegende Leuchtflecke von links nach rechts über eine zu untersuchende Probe geführt werden und nach Abscannen eines ersten Bereichs kann der Scanner so eingestellt werden, dass die vier Leuchtflecke in einem größeren Sprung zum nächsten abzurasternden Bereich springen. Man spricht hier von einem Handtuchscan.

Es ist klar, dass sich dadurch bei gegebener Pixelverweilzeit die Zeit, mit welcher ein bestimmter Probenbereich abgescannt wird, um einen Faktor reduziert, der der Anzahl der Leuchtflecke oder Abtastspots entspricht. Im gezeigten Beispiel reduziert sich diese Zeit also um einen Faktor vier. Die in Fig. 2 gezeigte Konfiguration kann in einem weiteren Modus auch eingesetzt werden, um ein verbessertes Signal-zu-Rausch-Verhältnis zu erzielen. Dazu überstreicht jeder Leuchtfleck abweichend von der soeben beschriebenen Variante das gesamte zu nutzende Bildfeld in der Probe. Jeder Punkt auf der Probe wird also, wenn vier Beleuchtungsteilstrahlen verwendet werden, jeweils vier Mal abgetastet. Im Vergleich zu einer Scanning-Mikroskopie, bei welcher nur ein einziger Leuchtfleck über die Probe gerastert oder gescannt wird, wird dadurch, sofern keine Sättigungs- oder Bleicheffekte vorliegen, eine Steigerung des Signals um einen Faktor erzielt, der wiederum der Anzahl der verwendeten Leuchtflecke, im erörterten Beispiel also um einen Faktor vier, gesteigert wird. Daran schließt sich eine Mittelung der auf diese Weise gewonnenen Bilder und die Darstellung eines gemittelten Bildes mit einem um den Faktor $\sqrt{N}$ verbesserten Signal-zu-Rausch-Verhältnis an. Dabei wird vorausgesetzt, dass die Lichtemission des Farbstoffs jeweils noch nicht in Sättigung ist. Dieser Bildgebungsmodus ist insbesondere aber nicht ausschließlich interessant, wenn man die Probe mit einem sehr schnell scannenden System, beispielsweise mit einem Resonanzscanner, abrastert.

Eine wichtige Größe bei resonant scannenden Systemen ist die sogenannte Pixelverweilzeit, also die Zeit, über welche ein Leuchtfleck auf einem bestimmten Probenbereich oder Probenvolumen verweilt. Diese liegt in aller Regel für Standardeinstellungen, beispielsweise mit 512 mal 512 Pixeln und einem Resonanzscanner, der bei 8 kHz oder höheren Resonanzfrequenzen betrieben wird, deutlich unterhalb von 100 ns.

Der Mittelungsmodus kann jetzt dazu führen, dass bei einer schnellen Bildaufnahme eines resonanten Systems, die auch auf einem großen Bildfeld möglich ist, eine effektiv um den Faktor N längere Pixelverweilzeit und damit auch ein um den Faktor $\sqrt{N}$ höheres Signal-zu-Rausch-Verhältnis erzielt wird. Der genaue Gewinnfaktor des SNR kann, da er noch vom Farbstoff und der genutzten Laserleistung abhängt, allerdings von $\sqrt{N}$ abweichen. Gerade bei Farbstoffen in Sättigung kann man durch eine Erhöhung der Laserleistung das Signal nur noch geringfügig erhöhen, schädigt aber zunehmend die Probe. Zudem ist die Bilddynamik bei sehr kurzen Pixelzeiten dadurch limitiert, dass die Probe in dieser Zeit nur noch eine sehr kleine Anzahl an Photonen emittieren kann. Weil der Mittelungsmode die effektive Pixelzeit erhöht, erhöht sich damit gleichzeitig die Dynamik im Bild. Daher hat ein solcher Modus überaus große Vorteile in der Kombination mit schnell scannenden und insbesondere resonant scannenden Systemen.

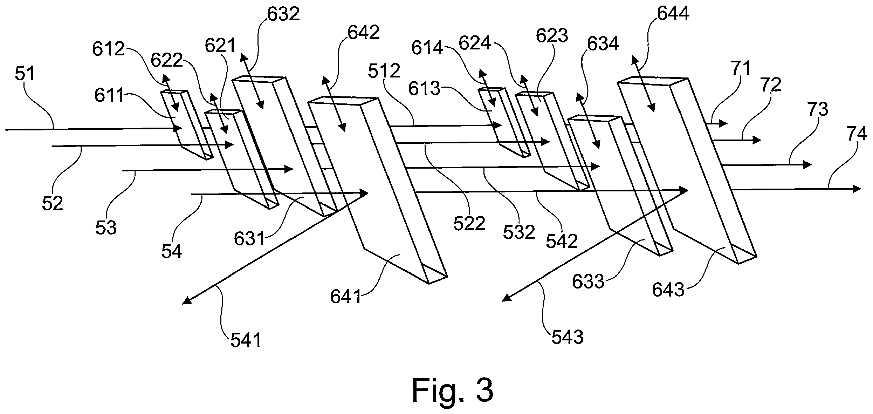

Ein weiteres Anwendungsbeispiel der im Zusammenhang mit Fig. 2 erläuterten Anordnung von Verlaufsfiltern wird mit Bezug auf Fig. 3 beschrieben. Die dort gezeigte Anordnung von Verlaufsfiltern ist grundsätzlich dieselbe wie in Fig. 2. Die Unterschiede liegen in der jeweiligen Einstellung der Grenzwellenlängen für die einzelnen Verlaufsfilter. Abweichend von der in Fig. 2 gezeigten Konfiguration, bei der die Grenzwellenlängen für die im Strahlengang ersten Verlaufsfilter 611, 621, 631 und 641 einerseits und für die im Strahlengang nachfolgenden Verlaufsfilter 613, 623, 633 und 643 andererseits jeweils gleich sind, weshalb im Ergebnis für alle vier Detektionsteilstrahlen 51, 52, 53, 54 gleiche Bandpassfilter bereitgestellt werden, sind die Einstellungen der Grenzwellenlängen bei der in Fig. 3 dargestellten Konfiguration für alle Verlaufsfilter unterschiedlich. Zweckmäßig werden die Grenzwellenlängen in der Regel aber doch jedenfalls so eingestellt, dass jeweils ein Bandpassfilter mit endlicher Breite bereitgestellt wird. Das bedeutet, dass die Grenzwellenlänge des Verlaufsfilters 613 größer ist als diejenige des Verlaufsfilters 611. Entsprechendes gilt für die Paare der Verlaufsfilter 621 und 623, 631 und 633 sowie 641 und 643. Im Allgemeinen sind die von den jeweils bereitgestellten Bandpassfiltern abgedeckten Wellenlängenintervalle aber unterschiedlich.

Konkret erfolgt die Einstellung der Verlaufsfilter 611 und 613 für den Detektionsteilstrahl 41 in Abhängigkeit der spektralen Zusammensetzung des zugehörigen und im Strahlengang vorausgehenden Beleuchtungsteilstrahls 31, mit anderen Worten also in Abhängigkeit von der spektralen Zusammensetzung des Beleuchtungslichts, welches auf den Leuchtfleck 41 trifft, von dem der entsprechende Detektionsteilstrahl 51 ausgeht. Entsprechendes gilt für die anderen Detektionsteilstrahlen 52, 53 und 54. Das bedeutet, dass, um beim Beispiel des ersten Detektionsteilstrahls 51 zu bleiben, die Ansteuerung des steuerbaren Strahlmanipulationsmittels 21, besonders bevorzugt also eines Kanals eines mehrkanaligen AOTF einerseits, und das Ansteuern der steuerbaren spektralen Auswahlmittel, beispielsweise also der Verlaufsfilter 611 und 613, aufeinander abgestimmt erfolgt.

Die Steuer- und Auswerteeinheit kann dabei in vorteilhafter Weise eingerichtet sein zum aufeinander abgestimmten Ansteuern des Strahlmanipulationsmittels in einem bestimmten Beleuchtungsteilstrahls einerseits und des spektralen Auswahlmittels in demjenigen Detektionsteilstrahls, der von dem durch den bestimmten Beleuchtungsteilstrahl auf der Probe erzeugten Leuchtfleck ausgeht, andererseits. Besonders bevorzugt kann beispielsweise das Strahlmanipulationsmittel 21 und das spektrale Auswahlmittel 611, 613 dergestalt angesteuert werden, dass gezielt ein bestimmter Fluoreszenzfarbstoff auf oder in der Probe angeregt und dessen Fluoreszenzemission nachgewiesen wird.

Die Kombination der Beleuchtung, also der Anregung, und der Detektion in einem Messverfahren kann also bei der Erfindung in vorteilhafter Weise so erfolgen, dass für jeden der N Beleuchtungsteilstrahlen mit Hilfe der steuerbaren Strahlmanipulationsmittel eine definierte spektrale Signatur eingestellt wird. In Abhängigkeit davon und damit korrespondierend können die steuerbaren spektralen Auswahlmittel, insbesondere also eine durch die Gesamtheit der Verlaufsfilter der Figuren 2 und 3 gebildete Filtereinheit, so eingestellt werden, dass eine für die spektrale Anregungssignatur optimale Detektion in jedem Beleuchtungs- und Detektionskanal erfolgen kann.

Ein Bildaufbau in einem solchen Modus, der auch als spektraler Modus bezeichnet werden kann, kann nun so erfolgen, dass die verschiedenen spektralen Bildanteile an teilweise verschiedenen Orten in der Probe aufgenommen und zu einem spektralen Bild fusioniert, das heißt zusammengesetzt werden. Dieses Bild kann dann auf einem Rechnerbildschirm, beispielsweise in einer Fehlfarbendarstellung, angezeigt werden. Unter einer Fehlfarbendarstellung wird in diesem Zusammenhang eine solche Darstellung verstanden, bei der das von bestimmten Fluoreszenzfarbstoffen emittierte Licht in jeweils unterschiedlichen Farben dargestellt wird, deren Wellenlänge aber nicht der tatsächlich von den jeweils beobachteten Farbstoffen emittierten Strahlung entsprechen muss. Zum Fusionieren der jeweiligen Teilbilder, die auf die einzelnen Detektionsteilstrahlen zurückgehen, kann es notwendig sein, geeignete Koordinatenverschiebungen vorzunehmen, weil bei ein- und derselben Scannereinstellung die Leuchtflecke 41, 42, 43, 44 auf unterschiedlichen Probenorten liegen.

Beim parallelen Modus liefert bei N Beleuchtungsteilstrahlen jeder der Detektionsteilstrahlen ein Teilbild, welches (wenn zeilenweise gescannt und beim Scannen jeweils um N Zeilen weiter gesprungen wird) Bilddaten jeweils nur für jede N-te Zeile enthält. Diese einzelnen Teilbilder können zu einem Gesamtbild zusammengesetzt werden. Der Intensitätskontrast im Gesamtbild entspricht dabei den an den einzelnen Punkten der Probe jeweils gemessenen Intensitäten. Wie beim spektralen Modus wird es zum Fusionieren der jeweiligen Teilbilder, die auf die einzelnen Detektionsteilstrahlen zurückgehen, notwendig sein, geeignete Koordinatenverschiebungen vorzunehmen, weil bei ein- und derselben Scannereinstellung die Leuchtflecke 41, 42, 43, 44 auf unterschiedlichen Probenorten liegen.

Am einfachsten gestaltet sich die Erzeugung eines Gesamtbilds für den Mittelungsmodus, bei dem die Intensitäten, die für die einzelnen Detektionsteilstrahlen für die verschiedenen Punkte der Probe gemessen werden, jeweils addiert werden. Klarerweise muss auch hier darauf geachtet werden, dass jeweils die richtigen, also die wirklich zu ein und demselben Probenpunkt gehörenden Intensitäten addiert werden. Das heißt, dass auch bei dem Mittelungsmodus geeignete Koordinatenverschiebungen vorgenommen werden müssen, weil bei ein- und derselben Scannereinstellung die Leuchtflecke 41, 42, 43, 44 auf unterschiedlichen Probenorten liegen. Wie beim parallelen Modus entspricht der Intensitätskontrast im Gesamtbild beim Mittelungsmodus den an den einzelnen Punkten der Probe jeweils gemessenen Intensitäten.

Grundsätzlich können auch in jedem der Beleuchtungsteilstrahlen mehrere Farben gleichzeitig zur Anregung vorliegen. Beispielsweise können bei einer Dreikanaldetektion mit einer räumlichen Zweifachaufteilung somit sechs spektrale Kanäle gemessen und bedient werden. Wenn man jedem Leuchtfleck ober Abtastspot eine andere Farbsignatur aufprägt, kann man bei vierfacher räumlicher Anregung und Dreikanaldetektion 12 spektrale Kanäle aufspannen. Allgemein kann man bei einer N-fachen räumlich spektralen Anregung mit M Detektionskanälen N mal M Komponenten trennen. Allgemein können bei der erfindungsgemäßen Vorrichtung und dem erfindungsgemäßen Verfahren die N Anregungskanäle beliebig in räumliche und spektrale Kanäle aufgeteilt werden.

Durch die Erfindung wird demnach eine optische Anordnung angegeben, mit der eine auf die Messaufgabe und die zu messende Probe optimierte mikroskopische Bildaufnahme möglich ist. Darüber hinaus kann die erfindungsgemäße Vorrichtung so gesteuert werden, dass sie sich selbst entsprechend einer Nutzervorgabe optimiert. Das bedeutet, dass die durch den Nutzer vorgegebene Messaufgabe auf optimale Einstellungen der optischen Anordnungen, mit anderen Worten also auf eine optimale Einstellung der steuerbaren Strahlmanipulationsmittel einerseits und der steuerbaren spektralen Auswahlmittel andererseits, übersetzt wird. Mit Hilfe von Algorithmen kann dann eine optimierte Strategie zur Vermessung einer bestimmten Probe gefunden und bei den Hardware-Komponenten eingestellt werden.

Im Zusammenhang mit Fig. 4 wird ein mehrkanaliger AOTF beschrieben, wie er als steuerbare Strahlmanipulationseinrichtung 20 bei einer erfindungsgemäßen Vorrichtung zum Einsatz kommen kann. Fig. 4 zeigt schematisch einen solchen mehrkanaligen AOTF 20, der prinzipiell aus einem homogenen Kristall, beispielsweise etwa aus $TeO_2$, besteht. Durch gestrichelte Linien ist angedeutet, dass dieser Kristall in insgesamt vier räumliche Bereiche, d.h. vier räumliche Kanäle aufgeteilt ist, durch die jeweils ein steuerbares Strahlmanipulationsmittel 21, 22, 23, 24, die jeweils im Prinzip funktional einzelne AOTFs darstellen, gebildet sind. Zum Ansteuern dieser einzelnen Kanäle, also der einzelnen AOTFs 21, 22, 23, 24 sind an diesen AOTFs jeweils Transducer 211, 221, 231 und 241, in der in Fig. 4 schematisch gezeigten Weise, aufgebracht. Bei den Transducern handelt es sich um piezoelektrische Kristalle, welche an den jeweiligen AOTF 21, 22, 23, 24 gebondet sind und mit welchen die für das Erzielen der gewünschten optischen Eigenschaften notwendige Schallwelle in den Kristall eingebracht wird. Die Signale, mit welchen die einzelnen Transducer 211, 221, 231 und 241 angesteuert werden, sind in Fig. 4 schematisch durch die Kreise 212, 222, 232 und 242 dargestellt. Das Prinzip ist grundsätzlich auf eine beliebige Anzahl n von Kanälen übertragbar.

Grundsätzlich möglich sind auch zweidimensionale Anordnungen von Transducern, die auch als Arrays bezeichnet werden, auf die das hier erläuterte Prinzip ebenfalls übertragen werden kann. Aus Gründen der Übersicht ist die Wechselwirkung der Transducer untereinander vereinfacht dargestellt. Betrachtet wird bei dem in Fig. 4 gezeigten Beispiel der AOTF 22, auf den von unten kommend ein Beleuchtungsteilstrahl 12 auftrifft. Durch die Wirkung der durch den Transducer 221 im AOTF 22 generierten Schallwelle wird ein Teil des Lichts in dem Beleuchtungsteilstrahl 12 in den Beleuchtungsteilstrahl 32 abgelenkt, genauer gesagt, gebeugt. Außerdem gibt es einen Strahlungsanteil 19, der ungebeugt durch den AOTF 22 hindurchtritt. Wesentlich für die hier folgende Betrachtung ist, dass für die Transmissionseigenschaften des AOTF 22 nicht nur das über den Transducer 221 aufgeprägte Steuersignal 222 von Bedeutung ist, sondern auch die Steuersignale 212, 232 und 242, mit welchen die Transducer 211, 231 und 241 der AOTFs 21, 23 beziehungsweise 24 angesteuert werden. Die Ansteuerung der weiteren AOTFs 21, 23, 24 beeinflusst also ebenfalls das Beugungsgitter, welches in dem AOTF 22 erzeugt wird. Diese Wechselwirkungen sind in Fig. 4 schematisch durch die Pfeile 201, 202 und 203 dargestellt.

Für die folgende Betrachtung wird davon ausgegangen, dass alle Transducer 211, 221, 231 und 241 mit einem sinusförmigen Signal gleicher Frequenz angesteuert werden, wobei $f(\lambda)$ die für die Wellenlänge $\lambda$ des Laserlichts erforderliche Anregungsfrequenz des jeweiligen AOTFs 21, 22, 23, 24 ist. Die Signalgeneratoren sind erfindungsgemäß untereinander synchronisiert und die Anfangsphase $\theta(n)$ kann für jeden der Signalgeneratoren 212, 222, 232 und 242 separat eingestellt werden. Die sinusförmigen Trägerfrequenzen werden zudem durch eine Modulationsfunktion $m_n(t)$ in ihrer Amplitude beeinflusst. Je nach Anwendung können sich die Modulationsfunktionen $m_n(t)$ für die Transducer 211, 221, 231, 241 unterscheiden oder identisch sein. Die an dem Transducer anliegenden Zeitsignale lassen sich dann wie folgt beschreiben:

$$S_n(t) = m_n(t) \times \sin(2\pi f_\lambda t + \theta_n)$$

Sollen durch das akusto-optische Element 20 mehrere Bündel aus jeweils M Laserlinien mit unterschiedlichen Wellenlängen $\lambda_n$ beeinflusst werden, so entsteht das resultierende Ansteuersignal des n-ten Kanals durch die Überlagerung/Summation von M Signalen $S_n(t)$. Ein Übersprechen zwischen den Transducern hat zur Folge, dass die Intensität des gebeugten Laserlichts, beispielsweise in dem zum AOTF 22 gehörenden Kanal, nicht nur durch das Ansteuersignal 222 beeinflusst wird, sondern auch eine Beeinflussung durch die Ansteuersignale erfährt, die an den anderen Transducern 211, 231, 241 des mehrkanaligen akusto-optischen Elements 20 anliegen.

Der Grad der Beeinflussung ist unter anderem abhängig von der elektrischen Isolation zwischen den verschiedenen Kanälen, dem Abstand der optischen Kanäle zueinander und der konkreten Geometrie der Transducer. Je nach Design werden für die optische Isolation zwischen den Kanälen Werte um etwa 30 dB erzielt, wobei der Hauptanteil des Übersprechens durch mangelhafte elektrische Isolation zwischen den Kanälen hervorgerufen wird. Das kann insbesondere dann problematisch sein, wenn die Transducer 211, 221, 231, 241 räumlich nahe beieinanderliegen. Gerade das ist aber ein wichtiger Anwendungsfall, wie er beispielsweise bei einem Einsatz in einem mehrkanaligen Laser-Scanning-Mikroskop vorliegt. Dabei sollen die zu manipulierenden oder beeinflussenden Strahlen möglichst einen kleinen Abstand untereinander aufweisen, um die Anforderungen an die Optik in einem akzeptablen Rahmen zu halten. Es sind deshalb eng benachbarte Transducer erwünscht. Diese sind aber zwangsläufig nicht beliebig isolierbar.

Wählt man eine Differenz der Anfangsphase der Ansteuersignale (212, 222, 232, 242) von zwei benachbarten Kanälen so, dass diese 90° + k x 180° beträgt, wobei k eine ganze Zahl ist, so sind die Ansteuersignale dieser Kanäle zueinander orthogonal. Für die gegenseitige Beeinflussung der Kanäle kann auf diese Weise ein Minimum erreicht werden. Die Erfindung hat also erkannt, dass es besonders vorteilhaft ist, wenn die Ansteuerung der Transducer bei einem mehrkanaligen akusto-optischen Element, wie beispielsweise einem mehrkanaligem AOTF oder einem mehrkanaligem AOM, phasenstarr erfolgt. Das bedeutet zugleich, dass die Ansteuersignale an den Transducern aller Kanäle für jede zu übertragende Wellenlänge $\lambda$ die exakt gleiche Anregungsfrequenz $f_\lambda$ aufweisen müssen. Wenn das nicht der Fall ist, kommt es wegen der Wechselwirkungen zwischen den Kanälen des mehrkanaligen akusto-optischen Elements zu Intensitätsschwankungen des Laserlichts, wobei die Frequenzen der Intensitätsschwankungen den Differenzfrequenzen der Ansteuersignale entsprechen.

Die Erfindung betrifft also eine neuartige Vorrichtung und ein neuartiges Verfahren zur Multispot-Scanning-Mikroskopie. Die erfindungsgemäße Lösung benötigt eine parallele Beleuchtung. Diese Beleuchtung muss in jedem Beleuchtungskanal, mindestens aber in einer Untermenge der Kanäle, in dem oben beschriebenen Sinn schaltbar sein, das heißt insbesondere im Hinblick auf Intensität und Wellenlänge der Strahlung in diesem Kanal. Ein Wellenleiterchip, wie oben beschrieben, kann dabei vorteilhaft sein. Auch andere Möglichkeiten der Strahlteilung sind möglich.

Die Detektion kann in der einfachsten Ausführung der erfindungsgemäßen Lehre auch ohne spektrale Trennung erfolgen. Mit N räumlich-spektralen Kanälen ist dann eine Messung von genau N spektralen Kanälen über die räumliche Aufteilung in der spektralen Anregungssignatur möglich. Andererseits können die N räumlichen Kanäle auch parallel eingesetzt werden für eine schnellere Bildaufnahme oder um ein verbessertes Signal-zu-Rausch-Verhältnis im Bild bei einer gegebenen Framerate zu nutzen. Unter einer Framerate versteht man dabei die Anzahl der pro Zeiteinheit aufgenommenen mikroskopischen Bilder.

Mit der erfindungsgemäßen Vorrichtung und dem erfindungsgemäßen Verfahren wird eine flexibel einstellbare optische Anordnung zur optimalen Bildaufnahme einer Probe bereitgestellt, bei der eine Optimierung hinsichtlich räumlicher und spektraler Messkanäle möglich ist. Ein Optimum kann dabei außerdem hinsichtlich der Probenschädigung und der Aufnahmezeit eingestellt und erzielt werden. Bei dem erfindungsgemäßen Verfahren ist ebenfalls eine mikroskopische Vermessung einer Probe mit einer Selbstoptimierung hinsichtlich räumlicher und spektraler Messkanäle sowie einer zeitlichen Auflösung und Verminderung der Probenschädigung möglich.

Bei besonders vorteilhaften Ausführungsvarianten wird eine räumliche Lichtverteilung polychromatisch mit einem Lichtwellenleiter erzeugt. Die räumliche Lichtverteilung kann mit segmentierten Elementen, beispielsweise einem mehrkanaligen AOTF, einzeln moduliert werden. Die spektrale Signatur der räumlichen Lichtverteilung kann für jeden Lichtstrahl einzeln eingestellt werden. So kann z.B. bei gleicher spektraler Signatur aller Teilstrahlen auch eine definierte aber jeweils verschiedene Helligkeit eingestellt werden. Somit ist eine Aufnahme mit einer erhöhten Dynamik im Bild möglich. Die erfindungsgemäße Vorrichtung und das erfindungsgemäße Verfahren können außerdem für eine zeitliche Beeinflussung der Strahlen untereinander eingesetzt werden. Insbesondere kann im oben beschriebenen Mittelungsmode die Helligkeit der Teilstrahlen in Abhängigkeit der Signale der jeweils anderen Teilstrahlen geregelt werden. Hiermit ist wiederum einer Erhöhung der Bilddynamik und ggfls. eine Verminderung des Photoschadens möglich.

Außerdem kann auch die Detektion flexibel, insbesondere korrespondierend zur Anregung und zusammen mit dieser im Hinblick auf eine zu lösende Messaufgabe eingestellt werden. Schließlich können die Komponenten in den optischen Strahlengängen so gewählt werden, dass die Punktverteilungsfunktion erhalten bleibt. Besonders bevorzugt werden hierzu im Detektionsstrahlengang Filteranordnungen verwendet, mit welchen das räumliche Abtasten der Punktverteilungsfunktion zur Erhöhung des Signal-zu-Rausch-Verhältnisses und zur Erhöhung der Auflösung eingesetzt wird. Diese Verfahren sind auch unter den Stichworten "photon reassignement" oder Airyscan-Verfahren bekannt.

**Patentansprüche**

1. Vorrichtung zur Multispot-Scanning-Mikroskopie,
   mit einer mehrfarbigen Lichtquelle (10) zum Bereitstellen von mindestens einem Beleuchtungslichtstrahl (18),
   mit einer Trenneinrichtung (16) zum Auftrennen des Beleuchtungslichtstrahls (18) in mehrere Beleuchtungsteilstrahlen (11, .., 14),
   mit ersten Optikmitteln (30) zum Bereitstellen eines Beleuchtungsstrahlengangs zum Leiten und Fokussieren der einzelnen Beleuchtungsteilstrahlen (11, .., 14) jeweils in einen Leuchtfleck (41, .., 44) auf oder in eine zu untersuchende Probe (40),
   mit einer Scaneinheit (38) zum Führen der Leuchtflecke (41, ..,44) über die Probe (40),
   mit einer Detektionseinheit (D1,.., D4) zum Nachweisen von Detektionslicht, welches die Probe (40) in Detektionsteilstrahlen (51, .., 54) nach Bestrahlung mit den einzelnen Beleuchtungsteilstrahlen (31, .., 34) abstrahlt,
   mit zweiten Optikmitteln (50) zum Bereitstellen eines Detektionsstrahlengangs (51, .., 54) zum Leiten der Detektionsteilstrahlen (51, .., 54) auf die Detektoreinheit (D1,.., D4),
   mit einer Steuer- und Auswerteeinheit (90) zum Ansteuern der Scaneinheit (38) und zum Auswerten des von der Detektionseinheit (D1,.., D4) nachgewiesenen Detektionslichts,
   **dadurch gekennzeichnet,**
   **dass** im Beleuchtungsstrahlengang für mindestens zwei der Beleuchtungsteilstrahlen (11, .., 14) ein steuerbares Strahlmanipulationsmittel (21, 22, 23, 24) vorhanden ist zum unabhängigen Einstellen einer spektralen Zusammensetzung des jeweiligen Beleuchtungsteilstrahls (11, .., 14) und
   **dass** die Steuer- und Auswerteeinheit (90) eingerichtet ist zum Ansteuern der Strahlmanipulationsmittel (21, .., 24).

2. Vorrichtung nach Anspruch 1,
   **dadurch gekennzeichnet,**
   **dass** im Detektionsstrahlengang für mindestens zwei der Detektionsteilstrahlen (51, .., 54; 71, .., 74) ein steuerbares spektrales Auswahlmittel (61, .., 64) vorhanden ist zum unabhängigen Beeinflussen einer spektralen Zusammensetzung von über den jeweiligen Detektionsteilstrahl (51, .., 54; 71, .., 74) auf die Detektionseinheit (D1,.., D4) gelangendem Detektionslicht und
   **dass** die Steuer- und Auswerteeinheit (90) auch eingerichtet ist zum Ansteuern der spektralen Auswahlmittel (61, .., 64).

3. Vorrichtung nach Anspruch 1 oder 2,
   **dadurch gekennzeichnet,**
   **dass** im Beleuchtungsstrahlengang für jeden Beleuchtungsteilstrahl (11, .., 14) zum unabhängigen Einstellen einer spektralen Zusammensetzung des Beleuchtungsteilstrahls (11, .., 14) ein Strahlmanipulationsmittel (21, 22, 23, 24) vorhanden ist.

4. Vorrichtung nach einem der Ansprüche 1 bis 3,
   **dadurch gekennzeichnet,**
   **dass** im Detektionsstrahlengang für jeden Detektionsteilstrahl (51, .., 54; 71, .., 74) ein steuerbares spektrales Auswahlmittel (61, .., 64) vorhanden ist zum unabhängigen Beeinflussen einer spektralen Zusammensetzung von über den jeweiligen Detektionsteilstrahl (51, .., 54; 71, .., 74) auf die Detektionseinheit (D1,.., D4) gelangendem Detektionslicht.

5. Vorrichtung nach einem der Ansprüche 1 bis 4,
   **dadurch gekennzeichnet,**
   **dass** die Detektionseinheit (D1,.., D4) mehrere Einzeldetektoren (D1, .., D4) aufweist zum Messen des Detektionslichts (51, .., 54), welches jeweils von einem bestimmten Leuchtfleck (41, .., 44) auf der Probe (40) ausgesandt wird.

**6.** Vorrichtung nach einem der Ansprüche 1 bis 5,
**dadurch gekennzeichnet,**
**dass** die optischen Komponenten im Detektionsstrahlengang, insbesondere die steuerbaren spektralen Auswahlmittel (61, .., 64), die Punktverteilungsfunktion erhaltende Komponenten sind.

**7.** Vorrichtung nach Anspruch 5,
**dadurch gekennzeichnet,**
**dass** die Einzeldetektoren (D1, .., D4) jeweils ortsauflösende Detektoren und insbesondere zweidimensionale Fotodiodenarrays, bevorzugt Single-Photon Avalanche Photo Diode Arrays (SPAD-Arrays), Mikrokanalplatten
und/oder fasergekoppelte Photomultiplier, sind.

**8.** Vorrichtung nach einem der Ansprüche 1 bis 7,
**dadurch gekennzeichnet,**
**dass** die Strahlmanipulationsmittel (21, .., 24) mehrere akustooptische Elemente, insbesondere AOM, AOD
und/oder AOTF, aufweisen.

**9.** Vorrichtung nach Anspruch 8,
**dadurch gekennzeichnet,**
**dass** die Strahlmanipulationsmittel (21, .., 24) mindestens einen mehrkanaligen AOTF aufweisen.

**10.** Vorrichtung nach Anspruch 9,
**dadurch gekennzeichnet,**
**dass** Ansteuersignale (212, .., 242) für verschiedene Kanäle des räumlich mehrkanaligen AOTF, insbesondere
nach einem Einschaltvorgang, relativ zueinander eine konstante Phasenlage, aufweisen.

**11.** Vorrichtung nach Anspruch 9 oder 10,
**dadurch gekennzeichnet,**
**dass** die Anregungssignale (212, .., 242) des mehrkanaligen AOTF für räumlich benachbarte Kanäle einen relativen
Phasenabstand von 90° + n mal 180° aufweisen, wobei n eine ganze Zahl ist.

**12.** Vorrichtung nach einem der Ansprüche 1 bis 11,
**dadurch gekennzeichnet,**
**dass** die Trenneinrichtung (16) mindestens einen Wellenleiterchip aufweist.

**13.** Vorrichtung nach einem der Ansprüche 2 bis 12,
**dadurch gekennzeichnet,**
**dass** die Steuer- und Auswerteeinheit (90) eingerichtet ist zum aufeinander abgestimmten Ansteuern des Strahlmanipulationsmittels (21, 22, 23, 24) in einem bestimmten Beleuchtungsteilstrahl (11,.., 14) einerseits und des
spektralen Auswahlmittels (61, .., 64) in demjenigen Detektionsteilstrahl (51, .., 54; 71, .., 74), der von dem durch
den bestimmten Beleuchtungsteilstrahl (11,.., 14) auf der Probe (40) erzeugten Leuchtfleck (41, .., 44) ausgeht,
andererseits.

**14.** Vorrichtung nach Anspruch 13,
**dadurch gekennzeichnet,**
**dass** die Steuer- und Auswerteeinheit (90) eingerichtet ist zum Ansteuern des Strahlmanipulationsmittels (21, 22,
23, 24) und des spektralen Auswahlmittels (61, .., 64) zum Nachweis mindestens eines, insbesondere genau eines,
bestimmten Fluoreszenzfarbstoffs auf oder in der Probe (40).

**15.** Vorrichtung nach einem der Ansprüche 2 bis 14,
**dadurch gekennzeichnet,**
**dass** die Auswahlmittel (61, .., 64) mindestens einen Farbfilter und/oder mindestens ein dispersives Mittel, insbesondere ein brechendes Mittel, beispielsweise ein Prisma, und/oder ein beugendes Mittel, beispielsweise ein Beugungsgitter, und/oder ein spektral selektiv reflektierendes Mittel, beispielsweise einen Spiegel, aufweisen.

**16.** Vorrichtung nach Anspruch 15,
**dadurch gekennzeichnet,**
**dass** die Farbfilter Farbverlaufsfilter (611, .., 641, 613, .., 643) sind.

**17.** Vorrichtung nach einem der Ansprüche 2 bis 16,
**dadurch gekennzeichnet,**
**dass** die steuerbaren Auswahlmittel (611, .., 641, 613, .., 643) für alle Detektionsteilstrahlen (51, .., 54) gleich sind.

**18.** Vorrichtung nach einem der Ansprüche 1 bis 17,
**dadurch gekennzeichnet,**
**dass** die ersten optischen Mittel (30) und die zweiten optischen Mittel (50) als gemeinsame Komponenten mindestens ein Mikroskopobjektiv (55), eine x-y-Scannereinheit (38) und/oder mindestens einen Hauptfarbteiler (57) aufweisen.

**19.** Verfahren zur Multispot-Scanning-Mikroskopie, insbesondere unter Verwendung der Vorrichtung nach einem der Ansprüche 1 bis 18,
bei dem mit einer mehrfarbigen Lichtquelle (10) mindestens ein Beleuchtungslichtstrahl (18) bereitgestellt wird,
bei dem der Beleuchtungslichtstrahl (18) in mehrere Beleuchtungsteilstrahlen (11, .., 14) aufgetrennt wird,
bei dem die einzelnen Beleuchtungsteilstrahlen (11, .., 14) in einem Beleuchtungsstrahlengang jeweils in einen Leuchtfleck (41, .., 44) auf oder in eine zu untersuchende Probe (40) geleitet und über diese gescannt werden,
bei dem Detektionslicht, welches die Probe (40) in Detektionsteilstrahlen (51, .., 54) nach Bestrahlung mit den einzelnen Beleuchtungsteilstrahlen (31, .., 34) abstrahlt, auf eine Detektoreinheit (D1,.., D4) geleitet und von dieser nachgewiesen wird,
**dadurch gekennzeichnet,**
**dass** eine spektrale Zusammensetzung des Beleuchtungslichts für mindestens zwei der Beleuchtungsteilstrahlen (11, .., 14) unabhängig eingestellt wird.

**20.** Verfahren nach Anspruch 19,
**dadurch gekennzeichnet,**
**dass** bei mindestens zwei Detektionsteilstrahlen (51, .., 54; 71, .., 74) eine spektrale Zusammensetzung von über den jeweiligen Detektionsteilstrahl (51, .., 54; 71, .., 74) auf die Detektionseinheit (D1,.., D4) gelangendem Detektionslicht unabhängig beeinflusst wird.

**21.** Verfahren nach Anspruch 19 oder 20,
**dadurch gekennzeichnet,**
**dass** die spektrale Zusammensetzung des Beleuchtungslichts für jeden Beleuchtungsteilstrahl (11, .., 14) unabhängig eingestellt wird.

**22.** Verfahren nach Anspruch 20 oder 21,
**dadurch gekennzeichnet,**
**dass** bei jedem Detektionsteilstrahl (51, .., 54; 71, .., 74) die spektrale Zusammensetzung von über den jeweiligen Detektionsteilstrahl (51, .., 54; 71, .., 74) auf die Detektionseinheit (D1,.., D4) gelangendem Detektionslicht unabhängig beeinflusst wird.

**23.** Verfahren nach einem der Ansprüche 20 bis 22,
**dadurch gekennzeichnet,**
**dass** die Strahlmanipulationsmittel (21, .., 24) so angesteuert werden, dass die spektrale Zusammensetzung für alle Beleuchtungsteilstrahlen (31, .., 34) gleich ist.

**24.** Verfahren nach einem der Ansprüche 20 bis 23,
**dadurch gekennzeichnet,**
**dass** die Strahlmanipulationsmittel (21, .., 24) so angesteuert werden, dass jeder Beleuchtungsteilstrahl (11, .. 14) eine unterschiedliche spektrale Zusammensetzung aufweist.

**25.** Verfahren nach einem der Ansprüche 19 bis 24,
**dadurch gekennzeichnet,**
**dass** die steuerbaren Auswahlmittel (611, .., 641, 613, .., 643) in allen Detektionsteilstrahlen (51, .., 54) gleich eingestellt werden.

**26.** Verfahren nach einem der Ansprüche 20 bis 25,
**dadurch gekennzeichnet,**
**dass** die Strahlmanipulationsmittel (21, 22, 23, 24) in einem bestimmten Beleuchtungsteilstrahl (11, 14) einerseits und die spektralen Auswahlmittel (61, .., 64) in demjenigen Detektionsteilstrahl (51, .., 54; 71, .., 74), der von dem durch den bestimmten Beleuchtungsteilstrahl (11, .., 14) auf der Probe (40) erzeugten Leuchtfleck (41, .., 44) ausgeht, andererseits, aufeinander abgestimmt angesteuert werden.

27. Verfahren nach Anspruch 26,
**dadurch gekennzeichnet,**
**dass** die spektrale Zusammensetzung des Beleuchtungslichts in dem Beleuchtungsteilstrahl (11,.., 14) eingestellt und das spektrale Auswahlmittel (61, .., 64) in dem Detektionsteilstrahl (51, .., 54; 71, .., 74) angesteuert wird zum Nachweis mindestens eines bestimmten, insbesondere genau eines, Fluoreszenzfarbstoffs.

28. Verfahren nach einem der Ansprüche 19 bis 27,
**dadurch gekennzeichnet,**
**dass** zum unabhängigen Einstellen der spektralen Zusammensetzung des Beleuchtungslichts in den Beleuchtungsteilstrahlen (11, .., 14) mindestens ein mehrkanaliger AOTF als Strahlmanipulationsmittel (21, .., 24) verwendet wird.

29. Verfahren nach Anspruch 28,
**dadurch gekennzeichnet,**
**dass** Ansteuersignale für die verschiedenen Kanäle des mehrkanaligen AOTF, insbesondere nach einem Einschaltvorgang, relativ zueinander eine konstante Phasenlage, aufweisen.

30. Verfahren nach einem der Ansprüche 19 bis 29,
**dadurch gekennzeichnet,**
**dass** die Anregungssignale des mehrkanaligen AOTF für räumlich benachbarte Kanäle einen relativen Phasenabstand von 90° + n mal 180° aufweisen, wobei n eine ganze Zahl ist.

31. Verfahren nach einem der Ansprüche 19 bis 30,
**dadurch gekennzeichnet,**
**dass** aus den jeweils detektierten Detektionsteilstrahlen ein resultierendes Bild zur Lösung einer Messaufgabe berechnet, erzeugt und/oder dargestellt wird.

**Claims**

1. Apparatus for multi-spot-scanning-microscopy,
comprising
a multi-color light source (10) for providing of at least one illumination light beam (18),
a separation device (16) for separating the illumination light beam (18) into a plurality of partial illumination light beams (11, .., 14),
first optical means (30) for providing of an illumination beam path for guiding and focusing of the respective partial illumination light beams (11, .., 14), in each case, to an illumination spot (41, .., 44) on or in a sample (40) to be investigated , a scan unit (38) for directing the illumination spots (41, ..,44) across the sample (40),
a detection unit (D1,.., D4) for detecting the detection light that the sample (40), upon irradiation with the respective partial illumination beams (31, .., 34) emits into partial detection beams (51, .., 54),
second optical means (50) for providing of a detection beam path (51, .., 54) for guiding said partial detection beams (51, .., 54) on the detection unit (D1,.., D4), a control and evaluation unit (90) for controlling the scan unit (38) and for evaluating the detection light detected by the detection unit (D1,.., D4), **characterized in**
**that** a controllable beam manipulation means (21, 22, 23, 24) is present in the illumination beam path for at least two of the partial illumination beams (11, .., 14) for the independent adjustment of a spectral composition of the respective partial illumination path (11, .., 14) and
**that** the control and evaluation unit (90) is designed for controlling the beam manipulation means (21, .., 24).

2. Apparatus according to claim 1,
**characterized in**
**that** in the detection beam path, for at least two of the partial detection beams, (51, .., 54; 71, .., 74) a controllable spectral selection means (61, .., 64) is present for independently influencing a spectral composition of detection light reaching the detection unit (D1,.., D4) via the respective partial detection beam (51, .., 54; 71, .., 74) and
**that** the control and evaluation unit (90) is also designed for controlling the spectral selection means (61, .., 64).

3. Apparatus according to claim 1 or 2,

**characterized in**

**that** in the illumination beam path a beam manipulation means (21, 22, 23, 24) is present for each partial illumination beam (11, .., 14) for independently adjusting a spectral composition of the partial illumination beam (11, .., 14)

4.  Apparatus according to 1 of the claims 1 to 3,
    **characterized in**
    **that** in the detection beam path a controllable spectral selection means (61, .., 64) is present for each partial detection beam (51, .., 54; 71, .., 74) for independently adjusting influencing a spectral composition of detection light reaching the detection unit (D1,.., D4) via the respective partial detection beam (51, .., 54; 71, .., 74).

5.  Apparatus according to 1 of the claims 1 to 4,
    **characterized in**
    **that** the detection unit (D1,.., D4) has a plurality of single detectors (D1, .., D4) for measuring the detection light (51, .., 54) being emitted, in each case, by a respective illumination spot (41, .., 44) on the sample (40).

6.  Apparatus according to 1 of the claims 1 to 5,
    **characterized in**
    **that** the optical components in the detection beam path, in particular the controllable spectral selection means (61, .., 64), are components that conserve the pointspread function.

7.  Apparatus according to claim 5,
    **characterized in**
    **that** the single detectors are (D1,.., D4), in each case, spatially resolving detectors and are, in particular, 2-dimensional photo-diode-arrays, preferably single-photon avalanche photodiode arrays (SPAD-Arrays), microchannel plates and/or fiber-coupled photomultipliers.

8.  Apparatus according to 1 of the claims 1 to 7,
    **characterized in**
    **that** the beam manipulation means (21, .., 24) comprise a plurality of acousto-optical elements, particularly AOM, AOD and/or AOTF.

9.  Apparatus according to claim 8,
    **characterized in**
    **that** the beam manipulation means (21, .., 24) comprise at least one multi-channel AOTF.

10. Apparatus according to claim 9
    **characterized in**
    **that** control signals (212, .., 242) for different channels of the spatially multi-channel AOTF, in particular after a switch-on-process, have a constant phase-distance with respect to each other.

11. Apparatus according to claim 9 or 10,
    **characterized in**
    **that** the control signals (212, .., 242) of the multi-channel AOTF for spatially adjacent channels have a relative phase-distance of 90° + n multiplied by 180°, where n is an integer.

12. Apparatus according to 1 of the claims 1 to 11,
    **characterized in**
    **that** the separation device (16) has at least one waveguide chip.

13. Apparatus according to 1 of the claims 2 to 12,
    **characterized in**
    **that** the control and evaluation unit (90) is designed for the coordinated controlling of the beam manipulation means (21, 22, 23, 24) in a specified partial illumination beam (11,.., 14) on the one hand and on the other hand of the spectral selection means (61,.., 64) in the partial detection beam (51, .., 54; 71, .., 74), emanating from the illumination spot (41,.. 44) generated by the specified partial illumination beam (11,.., 14).

14. Apparatus according to claim 13,
    **characterized in**

**that** the control and evaluation unit (90) is designed for controlling the beam manipulation means (21, 22, 23, 24) and the spectral selection means (61, .., 64) for detecting at least one, in particular exactly one, specified fluorescence dye on or in the sample (40).

**15.** Apparatus according to 1 of the claims 2 to 14,
**characterized in**
**that** the selection means (61, .., 64) comprise at least one color filter and/or at least one dispersion means, in particular a refracting means, e.g. a prism, and/or a diffracting means, e.g. a diffraction grating, and/or a spectrally selectively reflecting means, e.g. a mirror.

**16.** Apparatus according to claim 15,
**characterized in**
**that** the color filters are gradient filters (611, .., 641, 613, .., 643).

**17.** Apparatus according to 1 of the claims 2 to 16,
**characterized in**
**that** the controllable selection means (611, .., 641, 613, .., 643) are the same for all partial detection beams (51, .., 54).

**18.** Apparatus according to 1 of the claims 1 to 17,
**characterized in**
**that** the first optical means (30) and the second optical means (50) comprise, as common components at least a microscope objective (55), a x-y-scan unit (38) and/or at least one main beam splitter (57).

**19.** Method for multispot-scanning-microscopy, particularly making use of an apparatus according to one of the claims 1 to 18, where
with a multi-color light source (10) at least one illumination light beam (18) is provided,
the illumination light beam (18) is separated into a plurality of partial illumination beams (11, .., 14),
in an illumination beam path, the respective partial illumination beams (11, .., 14) are, in each case, guided to a illumination spot (41, .., 44) on or in a sample (40) to be investigated and are scanned across the latter,
detection light emitted by the sample (40) into partial detection beams (51, .., 54) upon irradiation with the respective partial illumination beams (31, .., 34) is guided onto a detection unit (D1,.., D4) and is detected by the latter, **characterized in**
a spectral composition of the illumination light is adjusted independently for at least one of the partial illumination beams (11, .., 14).

**20.** Method according to claim 19,
**characterized in**
**that**, with at least two partial detection beams (51, .., 54; 71, .., 74), a spectral composition of detection light reaching the detection unit (D1,.., D4) via the respective partial detection beam (51, .., 54; 71, .., 74) is being independently influenced.

**21.** Method according to claim 19 or 20,
**characterized in**
**that** the spectral composition of the illumination light is independently adjusted for each partial illumination beam (11, .., 14).

**22.** Method according to claim 20 or 21,
**characterized in**
**that** with each partial detection beam (51, .., 54; 71, .., 74), a spectral composition of detection light reaching the detection unit (D1,.., D4) via the respective partial detection beam (51, .., 54; 71, .., 74) is being independently influenced.

**23.** Method according to one of the claims 20 to 22,
**characterized in**
**that** the beam manipulation means (21, .., 24) are controlled such that the spectral composition is the same for all partial illumination beams (31, .., 34).

**24.** Method according to one of the claims 20 to 23,

**characterized in**

**that** the beam manipulation means (21, .., 24) are controlled such that each of the partial illumination beams (11, .. 14) has a different spectral composition.

25. Method according to one of the claims 18 to 24,
**characterized in**
**that** the controllable selection means (611, .., 641, 613, .., 643) are adjusted the same for all partial detection beams (51, .., 54).

26. Method according to one of the claims 20 to 25,
**characterized in**
**that** the beam manipulation means (21, 22, 23, 24) in a specified partial illumination beam (11, 14) on the one hand and the spectral selection means (61, .., 64) in the partial detection beam (51, .., 54; 71, .., 74) that emanates from the illumination spot (41, .., 44) generated on the sample (40) by the specified partial illumination beam (11, 14) on the other hand are controlled in coordination with each other.

27. Method according to claim 26,
**characterized in**
**that** the spectral composition of the illumination light in the partial illumination beam (11,.., 14) is adjusted and the spectral selection means (61, .., 64) in the partial detection beam (51, .., 54; 71, .., 74) is controlled for the detection of at least one specified, in particular exactly one, fluorescence dye.

28. Method according to one of the claims 19 to 27,
**characterized in**
**that**, for independently adjusting a spectral composition of the illumination light in the partial illumination beams, at least one multi-channel AOTF is used as a beam manipulation means (21, .., 24).

29. Method according to claim 28,
**characterized in**
**that** control signals for the different channels of the multi-channel AOTF, in particular after a switch-on-process, have a constant phase-distance with respect to each other.

30. Method according to one of the claims 19 bis 29,
**characterized in**
**that** the control signals of the multi-channel AOTF for spatially adjacent channels have a relative phase-distance of 90° + n multiplied by 180°, where n is an integer.

31. Method according to one of the claims 19 to 30,
**characterized in**
**that**, for the solution of a measurement objective, from the, in each case, detected partial detection beams a resulting image is calculated, generated and/or displayed.

## Revendications

1. Dispositif de microscopie à balayage multizone,
avec une source lumineuse multicolore (10) pour fournir au moins un faisceau lumineux d'éclairage (18),
avec un dispositif de séparation (16) pour séparer le faisceau lumineux d'éclairage (18) en plusieurs faisceaux partiels d'éclairage (11, .., 14),
avec des premiers moyens optiques (30) pour fournir un trajet de faisceau d'éclairage pour guider et focaliser les différents faisceaux partiels d'éclairage (11, .., 14) respectivement en un point lumineux (41, .., 44) sur ou dans un échantillon (40) à analyser,
avec une unité de balayage (38) pour diriger les points lumineux (41, .., 44) sur l'échantillon (40),
avec une unité de détection (D1, .., D4) pour mettre en évidence la lumière de détection que l'échantillon (40) rayonne en faisceaux partiels de détection (51, .., 54) après exposition au rayonnement des faisceaux partiels d'éclairage (31, .., 34) individuels,
avec des seconds moyens optiques (50) pour fournir un trajet de faisceau de détection (51, .., 54) pour guider les faisceaux partiels de détection (51, .., 54) vers l'unité de détection (D1, .., D4),

avec une unité de commande et d'évaluation (90) pour commander l'unité de balayage (38) et pour évaluer la lumière de détection mise en évidence par l'unité de détection (D1, .., D4),

**caractérisé en ce**

**qu'**un moyen de manipulation de faisceau commandable (21, 22, 23, 24) est présent dans le trajet de faisceau d'éclairage pour au moins deux des faisceaux partiels d'éclairage (11, .., 14) pour régler indépendamment une composition spectrale du faisceau partiel d'éclairage (11, .., 14) respectif, et

**que** l'unité de commande et d'évaluation (90) est configurée pour commander les moyens de manipulation de faisceau (21, .., 24).

2. Dispositif selon la revendication 1,
**caractérisé en ce**
**qu'**un moyen de sélection spectrale commandable (61, .., 64) est présent dans le trajet du faisceau de détection pour au moins deux des faisceaux partiels de détection (51, .., 54 ; 71, .., 74) pour influencer indépendamment une composition spectrale de la lumière de détection atteignant l'unité de détection (D1, .., D4) via le faisceau partiel de détection (51, .., 54 ; 71, .., 74) respectif, et
**que** l'unité de commande et d'évaluation (90) est également configurée pour commander les moyens de sélection spectrale (61, .., 64).

3. Dispositif selon la revendication 1 ou 2,
**caractérisé en ce**
**qu'**un moyen de manipulation de faisceau (21, 22, 23, 24) est présent dans le trajet du faisceau d'éclairage pour chaque faisceau partiel d'éclairage (11, .., 14) pour régler indépendamment une composition spectrale du faisceau partiel d'éclairage (11, .., 14).

4. Dispositif selon l'une des revendications 1 à 3,
**caractérisé en ce**
**qu'**un moyen de sélection spectrale commandable (61, .., 64) est présent dans le trajet du faisceau de détection pour chaque faisceau partiel de détection (51, .., 54 ; 71, .., 74) pour influencer indépendamment une composition spectrale de la lumière de détection atteignant l'unité de détection (D1, .., D4) via le faisceau partiel de détection (51, .., 54 ; 71, .., 74) respectif.

5. Dispositif selon l'une des revendications 1 à 4,
**caractérisé en ce**
**que** l'unité de détection (D1, .., D4) présente plusieurs détecteurs individuels (D1, .., D4) pour mesurer la lumière de détection (51, .., 54) qui est émise respectivement par un point lumineux (41, .., 44) déterminé sur l'échantillon (40).

6. Dispositif selon l'une des revendications 1 à 5,
**caractérisé en ce**
**que** les composants optiques dans le trajet du faisceau de détection, en particulier les moyens de sélection spectrale commandables (61, .., 64), sont des composants maintenant la fonction de distribution ponctuelle.

7. Dispositif selon la revendication 5,
**caractérisé en ce**
**que** les détecteurs individuels (D1, .., D4) sont respectivement des détecteurs à résolution spatiale et en particulier des réseaux de photodiodes bidimensionnels, de préférence des réseaux de photodiodes à avalanche à photon unique (réseaux SPAD), des galettes de microcanaux et/ou des photomultiplicateurs à fibre couplée.

8. Dispositif selon l'une des revendications 1 à 7,
**caractérisé en ce**
**que** les moyens de manipulation de faisceau (21, .., 24) présentent plusieurs éléments acousto-optiques, en particulier AOM, AOD et/ou AOTF.

9. Dispositif selon la revendication 8,
**caractérisé en ce**
**que** les moyens de manipulation de faisceau (21, .., 24) présentent au moins un AOTF multicanal.

10. Dispositif selon la revendication 9,
**caractérisé en ce**

**que** des signaux de commande (212, .., 242) pour différents canaux de l'AOTF spatialement multicanal, en particulier après une opération de mise sous tension, ont une position de phase constante les uns par rapport aux autres.

11. Dispositif selon la revendication 9 ou 10,
    **caractérisé en ce**
    **que** les signaux d'excitation (212, .., 242) de l'AOTF multicanal pour des canaux spatialement adjacents présentent un écart de phase relatif de 90° + n fois 180°, où n est un entier.

12. Dispositif selon l'une des revendications 1 à 11,
    **caractérisé en ce**
    **que** le dispositif de séparation (16) présente au moins une puce de guide d'ondes.

13. Dispositif selon l'une des revendications 2 à 12,
    **caractérisé en ce**
    **que** l'unité de commande et d'évaluation (90) est configurée pour commander, de manière coordonnée entre eux, le moyen de manipulation de faisceau (21, 22, 23, 24) dans un faisceau partiel d'éclairage (11, .., 14) déterminé, d'une part, et le moyen de sélection spectrale (61, .., 64) dans le faisceau partiel de détection (51, .., 54 ; 71, .., 74) qui émane du point lumineux (41, .., 44) produit sur l'échantillon (40) par le faisceau partiel d'éclairage (11, .., 14) déterminé, d'autre part.

14. Dispositif selon la revendication 13,
    **caractérisé en ce**
    **que** l'unité de commande et d'évaluation (90) est configurée pour commander le moyen de manipulation de faisceau (21, 22, 23, 24) et le moyen de sélection spectrale (61, .., 64) pour mettre en évidence au moins un, en particulier exactement un, colorant fluorescent déterminé sur ou dans l'échantillon (40).

15. Dispositif selon l'une des revendications 2 à 14,
    **caractérisé en ce**
    **que** les moyens de sélection (61, .., 64) comprennent au moins un filtre de couleur et/ou au moins un agent dispersant, en particulier un agent réfractif, par exemple un prisme, et/ou un agent diffractif, par exemple un réseau de diffraction, et/ou un agent réfléchissant de manière spectralement sélective, tel qu'un miroir.

16. Dispositif selon la revendication 15,
    **caractérisé en ce**
    **que** les filtres de couleur sont des filtres dégradés (611, .., 641, 613, .., 643).

17. Dispositif selon l'une des revendications 2 à 16,
    **caractérisé en ce**
    **que** les moyens de sélection commandables (611, .., 641, 613, .., 643) sont identiques pour tous les faisceaux partiels de détection (51, .., 54).

18. Dispositif selon l'une des revendications 1 à 17,
    **caractérisé en ce**
    **que** les premiers moyens optiques (30) et les seconds moyens optiques (50) ont comme composants communs au moins un objectif de microscope (55), une unité de balayage x-y (38) et/ou au moins un séparateur de couleurs primaires (57).

19. Procédé de microscopie à balayage multizone, en particulier utilisant le dispositif selon l'une des revendications 1 à 18,
    dans lequel au moins un faisceau lumineux d'éclairage (18) est fourni avec une source lumineuse multicolore (10),
    dans lequel le faisceau lumineux d'éclairage (18) est divisé en plusieurs faisceaux partiels d'éclairage (11, .., 14),
    dans lequel les différents faisceaux partiels d'éclairage (11, .., 14) dans un trajet de faisceau d'éclairage sont guidés respectivement en un point lumineux (41, .., 44) sur ou dans un échantillon (40) à analyser et sont balayés sur ce dernier,
    dans lequel la lumière de détection rayonnée par l'échantillon (40) en faisceaux partiels de détection (51, .., 54) après exposition au rayonnement des faisceaux partiels d'éclairage individuels (31, .., 34) est guidée vers une unité de détection (D1, .., D4) et est mise en évidence par cette dernière,
    **caractérisé en ce**

**qu'**une composition spectrale de la lumière d'éclairage est réglée indépendamment pour au moins deux des faisceaux partiels d'éclairage (11, .., 14).

20. Procédé selon la revendication 19,
    **caractérisé en ce**
    **que**, pour au moins deux faisceaux partiels de détection (51, .., 54 ; 71, .., 74), une composition spectrale de lumière de détection atteignant l'unité de détection (D1, .., D4) via le faisceau partiel de détection (51, .., 54 ; 71, .., 74) respectif est influencée indépendamment.

21. Procédé selon la revendication 19 ou 20,
    **caractérisé en ce**
    **que** la composition spectrale de la lumière d'éclairage est réglée indépendamment pour chaque faisceau partiel d'éclairage (11, .., 14).

22. Procédé selon la revendication 20 ou 21,
    **caractérisé en ce**
    **que**, pour chaque faisceau partiel de détection (51, .., 54 ; 71, .., 74), la composition spectrale de la lumière de détection atteignant l'unité de détection (D1, .., D4) via le faisceau partiel de détection (51, .., 54; 71, .., 74) respectif est influencée indépendamment.

23. Procédé selon l'une des revendications 20 à 22,
    **caractérisé en ce**
    **que** les moyens de manipulation de faisceau (21, .., 24) sont commandés de telle sorte que la composition spectrale est la même pour tous les faisceaux partiels d'éclairage (31, .., 34).

24. Procédé selon l'une des revendications 20 à 23,
    **caractérisé en ce**
    **que** les moyens de manipulation de faisceau (21, .., 24) sont commandés de telle sorte que chaque faisceau partiel d'éclairage (11, .., 14) présente une composition spectrale différente.

25. Procédé selon l'une des revendications 19 à 24,
    **caractérisé en ce**
    **que** les moyens de sélection commandables (611, .., 641, 613, .., 643) sont réglés de manière identique dans tous les faisceaux partiels de détection (51, .., 54).

26. Procédé selon l'une des revendications 20 à 25,
    **caractérisé en ce**
    **que** les moyens de manipulation de faisceau (21, 22, 23, 24) dans un faisceau partiel d'éclairage (11, 14) déterminé, d'une part, et les moyens de sélection spectrale (61, .., 64) dans le faisceau partiel de détection (51, .., 54 ; 71, .., 74) qui émane du point lumineux (41, .., 44) produit sur l'échantillon (40) par le faisceau partiel d'éclairage (11, .., 14) déterminé, d'autre part, sont commandés de manière coordonnée entre eux.

27. Procédé selon la revendication 26,
    **caractérisé en ce**
    **que** la composition spectrale de la lumière d'éclairage dans le faisceau partiel d'éclairage (11, .., 14) est réglée et le moyen de sélection spectrale (61, .., 64) dans le faisceau partiel de détection (51, .., 54 ; 71, .., 74) est commandé pour mettre en évidence au moins un, en particulier exactement un, colorant fluorescent déterminé.

28. Procédé selon l'une des revendications 19 à 27,
    **caractérisé en ce**
    **qu'**au moins un AOTF multicanal est utilisé comme moyen de manipulation de faisceau (21, .., 24) pour régler indépendamment la composition spectrale de la lumière d'éclairage dans les faisceaux partiels d'éclairage (11, .., 14).

29. Procédé selon la revendication 28,
    **caractérisé en ce**
    **que** les signaux de commande des différents canaux de l'AOTF multicanal, en particulier après une opération de mise sous tension, présentent une position de phase constante les uns par rapport aux autres.

**30.** Procédé selon l'une des revendications 19 à 29,
**caractérisé en ce**
**que** les signaux d'excitation de l'AOTF multicanal pour des canaux spatialement adjacents ont un écart de phase relatif de 90° + n fois 180°, où n est un entier.

**31.** Procédé selon l'une des revendications 19 à 30,
**caractérisé en ce**
**qu'**une image résultante obtenue à partir des faisceaux partiels de détection respectivement détectés est calculée, générée et/ou représentée pour la résolution d'une tâche de mesure.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 13131808 A1
- DE 10215162 B4
- US 6028306 A
- DE 102010047353 A1
- DE 102006034908 A1

**In der Beschreibung aufgeführte Nicht-Patentliteratur**

- **J. B. PAWLEY.** Handbook of Biological Confocal Mikroscopy. 2010